# EUROPÄISCHE PATENTANMELDUNG

(11) **EP 3 330 685 A1**
(43) Veröffentlichungstag der Anmeldung: **06.06.2018**
(21) Anmeldenummer: 16202174.5
(22) Anmeldetag: 05.12.2016
(51) Int. Cl.: G01J 3/42, G01J 3/10, G01J 3/02, G02B 27/10, G02B 27/12

(54) **MESSVORRICHTUNG FÜR ABSORPTIONSSPEKTROSKOPIE**

(71) Anmelder: SICK AG, 79183 Waldkirch/Breisgau (DE)
(72) Erfinder: EDLER, Julian, 79312 Emmendingen (DE); BEYER, Thomas, 79111 Freiburg (DE); FRANK, Samson, 79111 Freiburg (DE)
(74) Vertreter: Manitz Finsterwald Patentanwälte PartmbB

(57) **Zusammenfassung**

Eine Messvorrichtung zur gleichzeitigen spektroskopischen Messung mehrerer Substanzen, insbesondere mehrerer Gase, anhand jeweiliger wellenlängenabhängiger Absorption ausgesandter elektromagnetischer Strahlung durch die Substanzen, umfasst ein Grundelement und eine Kombinationsoptik und ist insofern modular, als das Grundelement dazu ausgebildet ist, dass zumindest zwei Strahlungsquellen zugleich an dem Grundelement angeordnet werden können, die aus einer Vielzahl sich bezüglich ihres jeweiligen Wellenlängenbereichs unterscheidender, bevorzugt wellenlängenvariabler, Strahlungsquellen auswählbar sind, und die Kombinationsoptik unabhängig davon, welche Strahlungsquellen aus der Vielzahl verschiedener Strahlungsquellen an dem Grundelement jeweils angeordnet sind, dazu ausgebildet ist, die von den jeweiligen an dem Grundelement angeordneten Strahlungsquellen ausgesandte elektromagnetische Strahlung räumlich zusammenzuführen, um sie für ein Durchlaufen einer Messstrecke mit den zu messenden Substanzen als einen einzelnen Messstrahl auszugeben. Die Messvorrichtung kann alternativ oder zusätzlich zu der Kombinationsoptik auch eine Trennoptik umfassen und insofern modular sein, als das Grundelement dazu ausgebildet ist, dass zumindest zwei Detektionsvorrichtungen zugleich an dem Grundelement angeordnet werden können, die aus einer Vielzahl sich bezüglich ihres jeweiligen Wellenlängenbereichs unterscheidender Detektionsvorrichtungen auswählbar sind, und die Trennoptik unabhängig davon, welche Detektionsvorrichtungen aus der Vielzahl verschiedener Detektionsvorrichtungen an dem Grundelement jeweils angeordnet sind, dazu ausgebildet ist, einen Messstrahl in Teilstrahlen unterschiedlicher Wellenlängenbereiche räumlich aufzuteilen, um die Teilstrahlen in

## Beschreibung

Die vorliegende Erfindung betrifft eine Messvorrichtung zur gleichzeitigen spektroskopischen Messung mehrerer Substanzen, insbesondere mehrerer Gase, anhand einer wellenlängenabhängigen Absorption ausgesandter elektromagnetischer Strahlung durch die Substanzen. Das gleichzeitige Messen mehrerer Substanzen ermöglicht insbesondere, den jeweiligen Beitrag der Substanzen zu einer durch die Substanzen gebildeten Mischung zu bestimmen. Das kann umfassen, dass Konzentrationen jeweiliger Substanzen bestimmt werden und/oder dass die Zusammensetzung eines Gemisches ermittelt wird.

Bei einer solchen Messvorrichtung kann es sich beispielsweise um ein Spektrometer handeln, das in grundsätzlich bekannter Weise insbesondere zur Gasspektroskopie eingesetzt werden kann. Die spektroskopische Messung umfasst insbesondere, dass elektromagnetische Strahlung so ausgesandt wird, dass sie eine Messstrecke durchläuft, innerhalb derer sich die zu messenden Substanzen befinden. Dazu kann es erforderlich sein, die Substanzen in die Messstrecke einzubringen (sogenannte extraktive Messung), z.B. indem eine Küvette oder eine sonstige Messzelle mit einer Probe der jeweiligen Substanzen in die Messstrecke eingesetzt wird. Um die Substanzen am Ort ihres Auftretens zu messen, kann auch vorgesehen sein, dass die Messvorrichtung so angeordnet wird, dass die Messstrecke durch die Substanzen verläuft (sogenannte In-Situ-Messung). Beispielsweise kann die Messvorrichtung so an einer Gasleitung, einem Kamin oder einem sonstigen Kanal, durch den eine zu messende Substanz geleitet wird, angeordnet werden, dass sich die Messstrecke quer durch den Kanal erstreckt (sogenannte Cross-Duct-Messung). Gemäß einem anderen Beispiel kann die Messstrecke auch an der Spitze einer Messlanze vorgesehen sein, die in die zu messenden Substanzen eingebracht wird.

All diesen spektroskopischen Verfahren ist gemein, dass Informationen über die zu messenden Substanzen anhand der für verschiedene Substanzen jeweils unterschiedlichen Absorption der elektromagnetischen Strahlung gewonnen werden. Denn verschiedene Substanzen absorbieren elektromagnetische Strahlung insbesondere bei unterschiedlichen für die jeweilige Substanz spezifischen Wellenlängen. Zur gleichzeitigen spektroskopischen Messung mehrerer Substanzen, die bei jeweils anderen charakteristischen Wellenlängen eine signifikante Absorption aufweisen (sogenannte Absorptionslinie), kann dementsprechend elektromagnetische Strahlung mit verschiedenen Wellenlängen durch die Substanzen geleitet werden, um die Absorption in Abhängigkeit von der Wellenlänge zu erfassen. Zu diesem Zweck kann die ausgesandte elektromagnetische Strahlung mehrere Wellenlängen gleichzeitig umfassen. Alternativ oder zusätzlich kann die Wellenlänge der elektromagnetischen Strahlung im Laufe der Messung auch variiert werden.

Beispielsweise kann die Messvorrichtung auf der sogenannten Tunable Diode Laser Spectroscopy (TDLS) beruhen und einen wellenlängenvariablen Laser als Strahlungsquelle umfassen. Dieser kann dann so betrieben werden, dass die von ihm ausgesandte elektromagnetische Strahlung einen Wellenlängenbereich durchläuft, der für zumindest eine der zu messenden Substanzen einen Bereich spezifischer Absorption umfasst. Dabei ist der Wellenlängenbereich, in dem eine jeweilige Strahlungsquelle, beispielsweise ein wellenlängenvariabler Laser, elektromagnetische Strahlung aussenden kann, typischerweise eher schmal, beispielsweise auf lediglich einige Nanometer (nm) begrenzt. Das kann aber ausreichen, eine sogenannte Absorptionslinie, d.h. ein Absorptionsspektrum im Bereich einer für eine jeweilige Substanz charakteristischen Absorption, zu erfassen, aus deren Profil die Konzentration der jeweiligen Substanz sowie gegebenenfalls auch deren Temperatur und Druck bestimmt werden können.

Weist eine Messvorrichtung lediglich eine Strahlungsquelle auf, kann die Anzahl der gleichzeitig messbaren Substanzen auf die Anzahl der in dem Wellenlängenbereich der Strahlungsquelle befindlichen charakteristischen Absorptionslinien beschränkt sein. Daher kann es zweckmäßig sein, in einer einzelnen Messvorrichtung mehrere Strahlungsquellen vorzusehen, um mehrere verschiedene Wellenlängenbereiche abdecken zu können. Dabei können die Wellenlängenbereiche der verschiedenen Strahlungsquellen überlappen oder, insbesondere wenn die jeweiligen Strahlungsquellen jeweils einen eher schmalen Wellenlängenbereich aufweisen, disjunkt sein.

Wenn mehrere Strahlungsquellen an der Messvorrichtung vorgesehen sind, deren ausgesandte elektromagnetische Strahlung die Messstrecke durchlaufen soll, muss die Messvorrichtung Mittel aufweisen, um die jeweilige elektromagnetische Strahlung zu der Messstrecke und durch die Messstrecke hindurch zu leiten. Grundsätzlich können die elektromagnetische Strahlung einer Strahlungsquelle und die elektromagnetische Strahlung einer anderen Strahlungsquelle die Messstrecke räumlich beabstandet voneinander, z.B. versetzt zueinander, als zwei separate Messstrahlen durchlaufen. Das kann den Vorteil haben, dass für die Strahlungsquellen jeweils separate Mittel, etwa eine jeweils eigene Optik, vorgesehen werden können, die untereinander unabhängig und daher für den jeweiligen Wellenlängenbereich einer jeweiligen Strahlungsquelle optimiert sein können.

Eine Messung mittels mehrerer die Messstrecke separat voneinander durchlaufender Messstrahlen kann aber insofern nachteilig sein, als das Vorsehen separater Optiken für die jeweiligen Strahlungsquellen eine größere Zahl an optischen Bauelementen erforderlich machen kann, was größere Herstellungskosten zur Folge hat. Selbst wenn die räumlich separaten Messstrahlen zumindest zum Teil gemeinsame optische Bauelemente durchlaufen, müssen diese aufgrund der im Vergleich zu einem einzelnen Messstrahl größeren räumlichen Ausdehnung der separaten Messstrahlen größere Durchmesser aufweisen, was wiederum höheren Kosten für das jeweilige optische Bauelement führen kann. Zudem benötigen mehr und größere optische Bauelemente mehr Bauraum in der Messvorrichtung, was einer vorzugweise kompakten Bauform der Messvorrichtung entgegensteht. Dabei kann nicht nur der Platzbedarf für die Messvorrichtung vergrößert sein, sondern etwa auch der Durchmesser eines Flansches für die Anordnung der Messvorrichtung an eine Leitung im Rahmen einer Cross-Duct- oder einer sonstigen In-Situ-Messung.

Des Weiteren können separate Messstrahlen auch einer Multipass-Messung entgegenstehen, bei der die Messstrecke mehrfach durchlaufen wird, um, z.B. bei einer kurzen Messstrecke und/oder einer geringen Konzentration der zu messenden Substanz, die effektive Messstrecke und somit die Absorption zu vergrößern. Dazu wird der Strahlengang eines jeweiligen Messstrahls mittels einer geeigneten Optik, z.B. mittels Spiegeln, mehrfach gefaltet. Eine solche Optik für mehrere separate Messstrahlen zu realisieren, kann dabei aufwändiger sein, als sie für einen einzelnen Messstrahl geeignet auszubilden.

Daher kann es vorzuziehen sein, wenn die Messstrecke von lediglich einem einzelnen Messstrahl durchlaufen wird.

Um zu diesem Zweck zwei oder mehr Strahlengänge, entlang denen elektromagnetische Strahlung verläuft, zusammenzuführen, können insbesondere Strahlteiler verwendet werden. Zwar ist die Bezeichnung "Strahlteiler" auf die Eigenschaft eines optischen Bauelements bezogen, einen Strahlengang in zwei Strahlengänge aufteilen zu können. Allerdings kann aufgrund der allgemeinen Umkehrbarkeit der Strahlengänge im Bereich geometrischer Optik ein Strahlteiler grundsätzlich auch in umgekehrte Richtung zum Zusammenführen zweier Strahlengänge sozusagen als "Strahlkombinierer" genutzt werden. Im vorliegenden Kontext wird ein derartiges optisches Bauelement unabhängig davon, ob es zum Aufteilen eines einzelnen Strahlengang in mehrere Strahlengänge oder zum Zusammenführen mehrerer Strahlengänge zu einem einzelnen Strahlengang genutzt wird, als "Strahlteiler" bezeichnet.

Beispielsweise kann ein einfacher Strahlteiler eine Grenzfläche zwischen zwei Medien mit unterschiedlichem optischen Brechungsindex umfassen, durch die hindurch von einer Seite auftreffende elektromagnetische Strahlung zumindest teilweise transmittiert wird und an der von der anderen Seite auftreffende elektromagnetische Strahlung zumindest teilweise reflektiert wird. Dabei wird die Grenzfläche zweckmäßigerweise derart angeordnet, dass die transmittierte und die reflektierte elektromagnetische Strahlung anschließend räumlich überlagert sind und sich in dieselbe Richtung weiter ausbreiten. Die Grenzfläche kann mittels geeigneter Beschichtungen speziell dazu ausgebildet sein, elektromagnetische Strahlung einer bestimmten Wellenlänge oder eines bestimmten Wellenlängenbereichs, gegebenenfalls zumindest bei Einfall unter einem bestimmten Winkel oder innerhalb eines bestimmten Winkelbereichs, besonders gut, d.h. zu einem besonders hohem Anteil, zu transmittieren bzw. zu reflektieren. Auf diese Weise kann ein Strahlteiler speziell im Hinblick darauf optimiert sein, elektromagnetische Strahlung einer bestimmten ersten Wellenlänge und elektromagnetische Strahlung einer bestimmten zweiten Wellenlänge mit möglichst geringen Verlusten zusammenzuführen bzw. aufzuteilen.

Schwierigkeiten können sich allerdings dann ergeben, wenn dasselbe optische Element für elektromagnetische Strahlung verschiedener Wellenlängen genutzt werden soll, die sich über einen breiten Wellenlängenbereich erstrecken. Denn insbesondere an Grenzflächen können Dispersionseffekte auftreten, die zur Folge haben, dass elektromagnetische Strahlung unterschiedlicher Wellenlänge jeweils unterschiedlichen Verläufen folgt. Aufgrund der grundsätzlichen Abhängigkeit des Brechungsindexes von der Wellenlänge, wird elektromagnetische Strahlung unterschiedlicher Wellenlängen unter verschiedenen Winkeln gebrochen, was einen Winkelversatz zwischen elektromagnetischer Strahlung unterschiedlicher Wellenlängen zur Folge hat. Ein solcher Winkelversatz führt aber dazu, dass die Anteile der elektromagnetischen Strahlung unterschiedlicher Wellenlängen auseinanderlaufen, was nicht nur der Bildung eines einzelnen Messstrahls entgegensteht, sondern auch schon dann störend ist, wenn die Messstrecke von mehreren separaten Messstrahlen durchlaufen werden soll, da diese vorzugsweise parallel verlaufen.

Daher sind Messvorrichtungen der vorstehend beschriebenen Art in der Regel darauf beschränkt, eine feste Anzahl von Strahlungsquellen, typischerweise höchstens zwei, zu umfassen, die eine bestimmte Wellenlänge aufweisen oder in einem bestimmten schmalen Wellenlängenbereich variierbar sind. Denn eine solche Messvorrichtung kann eine Optik umfassen, die speziell auf diese Strahlungsquellen und deren Wellenlängen optimiert ist. Eine dieser Strahlungsquelle gegen eine andere Strahlungsquelle mit anderer Wellenlänge auszutauschen oder anstelle einer wellenlängenvariablen Strahlungsquelle mit schmalem Wellenlängenbereich von einigen Nanometern eine Strahlungsquelle zu verwenden, die über einen breiten Wellenlängenbereich von z.B. 100 nm oder mehr, insbesondere von z.B. 1000 nm oder mehr, abstimmbar ist, ist dann allerdings aufgrund der spezifisch auf die Strahlungsquellen abgestimmten Optik nicht möglich. Dadurch kann der Anwendungsbereich einer solchen Messvorrichtung auf einige wenige Substanzen beschränkt sein, nämlich diejenigen, die in den Wellenlängenbereichen der jeweiligen Strahlungsquellen eine Absorptionslinie aufweisen.

Es ist eine Aufgabe der Erfindung, eine Messvorrichtung bereitzustellen, die eine verbesserte Flexibilität, insbesondere hinsichtlich der mittels der Messvorrichtung gleichzeitig messbaren Substanzen, aufweist und möglichst universell einsetzbar ist, insbesondere im Rahmen verschiedener Messverfahren (z.B. sowohl in-situ als auch extraktiv) und mit unterschiedlichen Messstrecken (sowohl single pass als auch multipass) verwendbar ist, und eine vorzugsweise kompakte Bauform aufweist.

Die Aufgabe wird gelöst durch eine Messvorrichtung mit den Merkmalen des Anspruchs 1. Bevorzugte Ausführungsformen der Messvorrichtung ergeben sich aus den Unteransprüchen, der vorliegenden Beschreibung sowie den Zeichnungen.

Die erfindungsgemäße Messvorrichtung umfasst ein Grundelement und eine Kombinationsoptik. Dabei ist das Grundelement dazu ausgebildet, dass zumindest zwei Strahlungsquellen zugleich an dem Grundelement angeordnet werden können, die aus einer Vielzahl sich bezüglich ihres jeweiligen Wellenlängenbereichs unterscheidender, bevorzugt wellenlängenvariabler, Strahlungsquellen auswählbar sind. Aufgrund dieser Ausbildung ist die Messvorrichtung modular. Denn die Messvorrichtung ist nicht von vornherein darauf festgelegt, welche Strahlungsquellen während der Messung tatsächlich an dem Grundelement angeordnet sind. Zudem ist vorzugsweise ein Wechsel der Strahlungsquellen möglich. Das kann umfassen, dass eine jeweilige Strahlungsquelle gegen eine andere ausgetauscht wird, dass eine Strahlungsquelle entfernt und/oder eine Strahlungsquelle hinzugefügt wird. Die Messvorrichtung muss daher vorteilhafterweise auch nicht auf eine bestimmte Anzahl von Strahlungsquellen festgelegt sein, die zum Betrieb der Messvorrichtung an dem Grundelement angeordnet werden. Vielmehr kann die Anzahl der Strahlungsquellen und deren jeweiliger Wellenlängenbereich (der auch zumindest im Wesentlichen lediglich eine einzige Wellenlänge umfassen kann) je nach der jeweiligen Zielsetzung, also insbesondere je nach den jeweiligen zu messenden Substanzen, festgelegt werden. Auf diese Weise kann die Messvorrichtung an die jeweils vorzunehmende Messung individuell anpassbar sein.

Dabei können zumindest zwei Strahlungsquellen zugleich an dem Grundelement angeordnet werden, so dass gleichzeitig elektromagnetische Strahlung unterschiedlicher Wellenlängen ausgesandt werden kann, um für die gleichzeitige Messung verschiedener Substanzen unterschiedliche Absorptionslinien messen zu können. Die Höchstzahl der an dem Grundelement anordenbaren Strahlungsquellen kann aber auch größer als zwei sein. Dass mehrere Strahlungsquellen zugleich an dem Grundelement angeordnet werden können, schließt dabei nicht aus, dass je nach Anwendung auch einmal lediglich eine Strahlungsquelle an dem Grundelement angeordnet wird, z.B. wenn lediglich eine Substanz gemessen werden soll oder mehrere Absorptionslinien innerhalb des Wellenlängenbereichs einer einzigen Strahlungsquelle liegen.

Eine jeweilige Strahlungsquelle umfasst vorzugsweise einen Laser, insbesondere einen wellenlängenvariablen Laser, z.B. Diodenlaser. Dabei können vorzugsweise sowohl Laser an der Messvorrichtung verwendbar sein, die lediglich über einen schmalen Wellenlängenbereich variabel sind, z.B. etwa 5 nm um eine zentrale Wellenlänge von z.B. etwa 1550 nm, als auch Laser, die über einen breiten Wellenlängenbereich variabel sind, z.B. etwa 100 nm um eine zentrale Wellenlänge von z.B. etwa 1550 nm oder etwa 3000 nm um eine zentrale Wellenlänge von z.B. etwa 10 µm, als auch Laser, die zumindest im Wesentlichen lediglich eine einzige Wellenlänge aufweisen. Ferner sind kohärente Strahlungsquellen zwar grundsätzlich bevorzugt. Es kommen aber auch inkohärente Strahlungsquellen für die Messvorrichtung in Betracht, insbesondere LEDs und/oder IR-Strahler.

Das genannte Grundelement kann insbesondere den zentralen Körper der Messvorrichtung bilden, an dem dann Anschlussmöglichkeiten und/oder Aufnahmen für die jeweiligen Strahlungsquellen vorgesehen sind. Das Grundelement kann beispielsweise ein Gehäuse und/oder eine Trägerstruktur der Messvorrichtung umfassen. Eine jeweilige an dem Grundelement angeordnete Strahlungsquelle kann dabei etwa von außen an dem Grundelement befestigt, z.B. angeflanscht oder angeschraubt, sein oder in ein entsprechend ausgestaltetes Grundelement aufgenommen sein. Die genannte Kombinationsoptik kann dann insbesondere innerhalb des Grundelements angeordnet sein. Beispielsweise kann eine jeweilige an dem Grundelement angeordnete Strahlungsquelle elektromagnetische Strahlung aussenden, die mittels der Kombinationsoptik entlang eines Strahlengangs geführt wird, der innerhalb des Grundelements bis zur Messstrecke verläuft, wobei die Messstrecke selbst innerhalb oder außerhalb des Grundelements vorgesehen sein kann. Nach Durchlaufen der Messstrecke kann die elektromagnetische Strahlung entlang eines weiteren Strahlengangs wiederum im Grundelement verlaufen und beispielsweise zu Detektionsvorrichtungen geführt werden, die wiederum innerhalb des Grundelements angeordnet oder auch von außen an dem Grundelement befestigt, z.B. angeflanscht, sein können.

Für die genannte Modularität der Messvorrichtung ist dabei neben der Möglichkeit, verschiedene Strahlungsquellen an dem Grundelement anzuordnen, ferner wichtig, dass die Kombinationsoptik unabhängig davon, welche Strahlungsquellen aus der Vielzahl verschiedener Strahlungsquellen an dem Grundelement jeweils angeordnet sind, dazu ausgebildet ist, die von den jeweiligen an dem Grundelement angeordneten Strahlungsquellen ausgesandte elektromagnetische Strahlung räumlich zusammenzuführen, um sie für ein Durchlaufen einer Messstrecke mit den zu messenden Substanzen als einen einzelnen Messstrahl auszugeben. Die Kombinationsoptik ist also nicht lediglich auf eine bestimmte Paarung oder einen bestimmten Satz von Strahlungsquellen mit definierten Wellenlängenbereichen optimiert, sondern so ausgebildet, dass für unterschiedliche Sätze von an dem Grundelement angeordneten Strahlungsquellen unterschiedlicher Wellenlängenbereiche die elektromagnetische Strahlung aller dieser Strahlungsquellen räumlich zusammengeführt wird. Dabei umfasst das räumliche Zusammenführen insbesondere, dass die verschiedenen Strahlengänge nach dem Zusammenführen parallel verlaufen und einander zudem räumlich überlagern, beispielsweise indem die jeweiligen Strahlquerschnitte überlappen. Auf diese Weise kann die zusammengeführte elektromagnetische Strahlung der verschiedenen an dem Grundelement angeordneten Strahlungsquellen die Messstrecke dann als ein einzelner Messstrahl durchlaufen.

Zur Modularität der Messvorrichtung kann darüber hinaus beitragen, wenn die Kombinationsoptik ihrerseits modular aufgebaut ist. So kann die Kombinationsoptik beispielsweise mehrere Teiloptiken umfassen, die insbesondere jeweils als Strahlteiler ausgebildet sind (allerdings als Strahlkombinierer fungieren), und unabhängig davon, welche Strahlungsquellen aus der Vielzahl verschiedener Strahlungsquellen an dem Grundelement jeweils angeordnet sind, dazu ausgebildet sind, von den jeweiligen an dem Grundelement angeordneten Strahlungsquellen ausgesandte elektromagnetische Strahlung räumlich zusammenzuführen, insbesondere derart, dass die elektromagnetische Strahlung die jeweilige Teiloptik als ein einzelner Strahl verlässt. Verschiedene solcher Teiloptiken können dann in Serie oder auch gemäß einer verzweigten Struktur (wie weiter unten noch erläutert wird) zueinander bzw. in Bezug zu den jeweiligen Strahlungsquellen flexibel angeordnet werden. Auf diese Weise kann die Messvorrichtung besonders individuell für verschiedene Anwendungen anpassbar sein.

Wenn als Kombinationsoptik eine Anordnung modularer Teiloptiken vorgesehen ist, die ein eigenes Gehäuse oder eine eigene Trägerstruktur aufweisen, über das/die sie untereinander verbunden sind, kann auch diese Anordnung von Teiloptiken das genannte Grundelement der Messvorrichtung bilden, da ein gesondertes Element, beispielsweise ein gesondertes Gehäuse oder eine gesonderte Trägerstruktur, zum Anordnen der jeweiligen Strahlungsquellen dann nicht zwingend erforderlich ist. Dabei kann eine solche Anordnung von Teiloptiken zudem Justagemodule oder Abstandsmodule umfassen, die nicht dem Kombinieren oder Trennen verschiedener Strahlengänge, sondern einer korrekten Ausrichtung von zu diesem Zweck vorgesehenen Teiloptiken relativ zueinander dienen können.

Grundsätzlich braucht die Messvorrichtung zunächst, also z.B. in einem Auslieferungszustand, überhaupt keine Strahlungsquelle aufzuweisen, so dass es einem Nutzer der Messvorrichtung vorbehalten bleibt, jeweilige Strahlungsquellen bereitzustellen und je nach Anwendung an dem Grundelement der Messvorrichtung anzuordnen. Die Messvorrichtung kann aber auch bereits eine oder mehrere Strahlungsquellen umfassen, die grundsätzlich gegen andere, von der Messvorrichtung gegebenenfalls nicht umfasste Strahlungsquellen austauschbar sein können.

Die Modularität der Messvorrichtung kann sich vorteilhaft auf den Zusammenbau der Messvorrichtung durch den Hersteller und/oder auf die Benutzung der Messvorrichtung durch einen Nutzer auswirken. Einem Hersteller ermöglicht die Modularität der Messvorrichtung, eine Vielzahl verschiedener Varianten der Messvorrichtung, die einen jeweils anderen Satz von Strahlungsquellen aufweisen, basierend auf demselben Grundelement und derselben Kombinationsoptik oder zumindest denselben modularen Teiloptiken zu fertigen. Eine auf diese Weise gefertigte Messvorrichtung ist also schon aufgrund ihres erfindungsgemäßen Aufbaus modular, der grundsätzlich die Anordnung verschiedener Strahlungsquellen ermöglicht. Dabei steht es der Modularität nicht entgegen, dass ein späteres Anschließen und/ oder Lösen einer jeweiligen Strahlungsquelle für einen Endnutzer zu komplex sein kann. Vorzugsweise geht die Modularität aber so weit, dass auch ein Endnutzer die Messvorrichtung von Anwendung zu Anwendung nach Bedarf individuell umkonfigurieren kann.

Gemäß einer vorteilhaften Ausführungsform ist die Kombinationsoptik dazu ausgebildet, dass die von den jeweiligen an dem Grundelement angeordneten Strahlungsquellen ausgesandte elektromagnetische Strahlung in dem Messstrahl parallel verläuft. Dabei beträgt der Parallelversatz zwischen von unterschiedlichen Strahlungsquellen ausgesandter elektromagnetischer Strahlung vorzugsweise höchstens 50 % des mittleren Strahldurchmessers der jeweils beteiligten Strahlen. Insbesondere ist der Parallelversatz derart gering, dass sich die Strahlen räumlich überlappen, dass also die jeweiligen Strahlquerschnitte eine Schnittmenge aufweisen. Ein auf diese Weise gebildeter einzelner Messstrahl kann somit die Wellenlängen aller von den jeweiligen an dem Grundelement angeordneten Strahlungsquellen ausgesandten elektromagnetischen Strahlung umfassen und kann dabei wie ein von einer einzigen Strahlungsquelle erzeugter einzelner Messstrahl eingesetzt werden. Insbesondere sind im Vergleich zu einem von einer einzelnen Strahlungsquelle gebildeten Messstrahl keine wesentlich größeren Durchmesser für die Messstrecke erforderlich, so dass Eintritts- oder Austrittsöffnungen, Messzellen etc. im Wesentlichen dieselben Maße aufweisen können und etwa auch Multipass-Messungen möglich sind.

Gemäß einer bevorzugten Ausführungsform umfasst die Kombinationsoptik zumindest ein optisches Bauelement, das dazu ausgebildet ist, aus zumindest zwei, insbesondere drei, vier oder fünf, verschiedenen Richtungen auf das optische Bauelement treffende elektromagnetische Strahlung unterschiedlicher Wellenlängenbereiche räumlich zusammenzuführen und als einen einzelnen Strahl auszugeben. Bei einem solchen optischen Bauelement handelt es sich also insbesondere um einen als Strahlkombinierer genutzten Strahlteiler. Insbesondere kann die Kombinationsoptik mehrere derartige optische Bauelemente umfassen, wobei die Kombinationsoptik auch mehrere Teiloptiken umfassen kann, die jeweils zumindest ein derartiges optisches Bauelement umfassen.

Bei einem solchen optischen Bauelement kann es sich beispielsweise um einen dichroitischer Strahlteiler handeln, der im Rahmen der Kombinationsoptik als Strahlkombinierer verwendet wird. Ein solcher dichroitischer Strahlteiler umfasst ein Substrat eines bestimmten Brechungsindexes, durch das ein erster Strahl transmittiert werden kann. Ein zweiter Strahl kann dann unter einem solchen Winkel auf diejenige Stelle gelenkt werden, an der der erste Strahl aus dem Substrat austritt, dass er nach Reflexion an dem Substrat mit dem ersten Strahl räumlich zumindest im Wesentlichen zusammenfällt. An der Oberfläche, an der der zweite Strahl reflektiert und der erste Strahl transmittiert wird, wird allerdings zwangsläufig stets auch ein Anteil des ersten Strahls reflektiert und ein Anteil des zweiten Strahls transmittiert, die dann nicht zum zusammengeführten Strahl beitragen, so dass Verluste entstehen. Um diese Verluste zu minimieren, ist die Oberfläche bei einem dichroitischen Strahlteiler vorteilhafterweise mit einer Beschichtung versehen, welche einen besonders hohen Reflexionsgrad bzw. Transmissionsgrad in einem jeweiligen bestimmten Wellenlängenbereich aufweist. Der Reflexionsgrad bzw. der Transmissionsgrad beträgt dabei insbesondere zumindest 90%, vorzugsweise zumindest etwa 95%, besonders bevorzugt zumindest etwa 98%.

Der Wellenlängenbereich der Transmission und der Wellenlängenbereich der Reflexion können dabei nicht nahtlos ineinander übergehen, sondern sind durch einen Übergangsbereich getrennt, der typischerweise zumindest 10 bis 15 nm breit und in der Regel noch deutlich breiter ist. Wenn Strahlen zusammengeführt werden sollen, deren Wellenlängenbereiche sehr nah, z.B. wenige Nanometer, beieinander liegen, kann ein dichroitischer Strahlteiler daher ungeeignet sein. Zudem sind die Wellenlängenbereiche hoher Reflexion bzw. Transmission in ihrer Breite begrenzt. Wenn sich die zusammenzuführenden Strahlen jeweils bereits über einen breiten Wellenlängenbereich erstrecken, kann unter Umständen ein über den gesamten jeweiligen Wellenlängenbereich ausreichend hoher Reflexionsgrad bzw. Transmissionsgrad nicht oder nur mit einer besonders komplexen und/oder teuren Beschichtung erreicht werden. Insbesondere in solchen Fällen kann es bevorzugt sein, wenn das optische Bauelement als ein polarisierender Strahlteiler, insbesondere als Polwürfel ausgebildet ist.

Im Unterschied zu einem dichroitischen Strahlteiler hängen bei einem polarisierenden Strahlteiler der Reflexionsgrad und der Transmissionsgrad nicht von der jeweiligen Wellenlänge der elektromagnetischen Strahlung ab (zumindest ist dies nicht der primäre Effekt), sondern von deren Polarisation. Solange die zusammenzuführenden Strahlen unterschiedlich polarisiert sind, kann der polarisierende Strahlteiler die Strahlen mit hoher Effizienz, d.h. mit geringen Verlusten, unabhängig davon zusammenführen, welche Wellenlänge oder welche Wellenlängen sie jeweils aufweisen. Dabei wird in der Regel p-polarisierte Strahlung transmittiert, wohingegen s-polarisierte Strahlung reflektiert wird. Grundsätzlich können die Wellenlängen dabei beliebig nah beieinander liegen oder sogar identisch sein. Weisen die zusammenzuführenden Strahlen bereits verschiedene Wellenlängen auf, können sich die Wellenlängenbereiche der Strahlen daher auch überlappen.

Ein polarisierender Strahlteiler kann beispielsweise als Polwürfel ausgebildet sein, der typischerweise durch zwei Prismen gebildet wird, die an der Hypotenuse über eine Beschichtung, z.B. einen Harz oder einen Klebstoff, miteinander verbunden sind. Die Beschichtung ist dabei so gewählt, dass zumindest über einen gewissen Wellenlängenbereich, der vergleichsweise breit sein kann, s-polarisierte Strahlung reflektiert und p-polarisierte Strahlung transmittiert wird, oder umgekehrt.

Allerdings sind polarisierende Strahlteiler schlechter als wellenlängenselektive Strahlteiler dazu geeignet, in Serie verwendet zu werden. Wenn etwa ein mittels eines polarisierenden Strahlteilers zusammengeführter Strahl mit einem weiteren Strahl wiederum mittels eines polarisierenden Strahlteilers zusammengeführt werden soll, müsste der schon zusammengeführte Strahl zunächst erneut polarisiert werden, wodurch in der Regel zu hohe Verluste entstehen.

Alternativ zu einem dichroitischen oder polarisierenden Strahlteiler kann ein jeweiliges optisches Bauelement der Kombinationsoptik auch als ein Volumen-Bragg-Gitter oder als ein geometrischer Strahlteiler ausgebildet sein. Ein Volumen-Bragg-Gitter weist eine Modulation des Brechungsindexes im Substrat auf, die insbesondere holographisch z.B. in photosensitivem Glas als Substrat hervorgerufen werden kann. Das Volumen-Bragg-Gitter kann dann in einem sehr schmalen Wellenlängenbereich, der weniger als 1 nm betragen kann, mit sehr hohem Reflexionsgrad, der beispielsweise etwa 99% oder auch mehr betragen kann, elektromagnetische Strahlung reflektieren, während elektromagnetische Strahlung anderer Wellenlängen mit sehr hohem Transmissionsgrad transmittiert wird. Daher können Volumen-Bragg-Gitter insbesondere dazu genutzt werden, sehr nah beieinander liegende Wellenlängen zusammenzuführen bzw. aufzutrennen.

Bei einem geometrischen Strahlteiler sind die Reflexion und Transmission dagegen weitgehend unabhängig von der Wellenlänge und von der Polarisation der Strahlung. Daher eignen sich geometrische Strahlteiler insbesondere dazu zwei Strahlen zusammenzuführen, die jeweils verschiedene über einen breiten Wellenlängenbereich verteilte Wellenlängen aufweisen. Das Aufteilen bzw. Zusammenführen der elektromagnetischen Strahlung erfolgt dabei durch die geometrische Struktur des Strahlteilers. Zum Beispiel kann ein geometrischer Strahlteiler als Furchenspiegel ausgebildet sein, dessen Oberfläche streifenweise alternierend ausgerichtet ist. Ein anderes Beispiel ist ein halbdurchlässiger Spiegel, der z.B. durch ein metallbeschichtetes Glassubstrat gebildet wird, wobei die Beschichtung nicht einheitlich, insbesondere nicht vollständig, ist. Beispielsweise kann das Substrat lediglich teilweise beschichtet sein, wobei dann dort, wo das Substrat beschichtet ist, eine nahezu vollständige Reflexion erfolgt und an den anderen Stellen eine nahezu vollständige Transmission erfolgt. Dabei kann die Beschichtung z.B. als regelmäßige Streifen oder schachbrettartig ausgebildet sein. Die Oberflächenstruktur bzw. das Verhältnis von beschichteter zu unbeschichteter Oberfläche bestimmt dann das Verhältnis der transmittierten Strahlung zur reflektierten Strahlung.

Dabei kann ein geometrischer Strahlteiler auch verstellbar ausgebildet sein, so dass das Verhältnis zwischen Transmission und Reflexion grundsätzlich einstellbar sein kann. Dazu können insbesondere mikro-(opto-)elektro-mechanische Systeme (MEMS bzw. MOEMS) genutzt werden, die z.B. elektrisch angesteuert mechanisch verstellbare Mikrospiegel umfassen können.

Gemäß einer weiteren vorteilhaften Ausführungsform umfasst die Kombinationsoptik als optisches Bauelement zwei Keilelemente, die jeweils zwei nicht-parallele Grenzflächen aufweisen und derart angeordnet sind, dass elektromagnetische Strahlung, welche in einer Einfallsrichtung auf das optische Bauelement trifft und die zwei Grenzflächen des einen Keilelements sowie die zwei Grenzflächen des anderen Keilelements passiert, das optische Bauelement in einer Ausfallsrichtung verlässt, die unabhängig von der Wellenlänge der elektromagnetischen Strahlung in einem bestimmten Winkel, insbesondere parallel, zu der Eingangsrichtung ausgerichtet ist. Ein derartiges optisches Bauelement kann grundsätzlich als wellenlängenselektiver Strahlteiler bzw. Strahlkombinierer genutzt werden, insbesondere um zumindest zwei Strahlen räumlich zusammenzuführen. Denn an jeder der jeweils zwei Grenzflächen der zwei Keilelemente, die von der genannten elektromagnetischen Strahlung passiert werden, kann grundsätzlich ein weiterer Strahl eingespiegelt werden, wobei das Einspiegeln vorzugsweise an einer Grenzfläche erfolgt, an der der transmittierte Strahl aus einem Keilelement austritt, da der anderen Strahl dann für das Reflektieren nicht zunächst an einer anderen Grenzfläche transmittiert werden muss.

Für ein solches Einspiegeln kann grundsätzlich auch ein Substrat mit planparallelen Grenzflächen verwendet werden. Allerdings können, gerade bei Verwendung eines Lasers als Strahlungsquelle, zwischen den parallel zueinander ausgerichteten Grenzflächen eines solchen Substrats Etalon-Effekte und sonstige Interferenzen auftreten, welche die Messung in erheblichem Maße stören können. Daher ist ein Keilelement, also ein Substrat mit von der jeweiligen elektromagnetischen Strahlung zu passierenden Grenzflächen, die nicht-parallel zueinander ausgerichtet sind, einem planparallelen Substrat vorzuziehen. Insbesondere wird ein solches Keilelement in einem von 90° verschiedenen Winkel zu einem jeweiligen einfallenden Strahl ausgerichtet, so dass reflektierte Anteile dieses Strahls nicht zurück in Richtung der Strahlungsquelle reflektiert werden.

Allerdings wird die durch ein jeweiliges Substrat transmittierte elektromagnetische Strahlung beim Durchlaufen des Substrats aufgrund der Wellenlängenabhängigkeit des Brechungsindexes unterschiedlich stark gebrochen. Das hat bei einem planparallelen Substrat lediglich einen Parallelversatz zur Folge. Bei einem Keilelement ergibt sich zusätzlich auch ein Winkelversatz, also ein Winkelunterschied zwischen der Richtung, in der die elektromagnetische Strahlung zu dem Substrat gelang, und der Richtung, in der sie das Substrat wieder verlässt. Dabei sind der Parallelversatz und der Winkelversatz von der Wellenlänge der elektromagnetischen Strahlung abhängig. Wenn lediglich zwei Strahlen zusammenzuführen sind, die jeweils einen definierten schmalen Wellenlängenbereich aufweisen, können diese Dispersionseffekte bei der Anordnung des Substrats und der Ausrichtung der einfallenden Strahlen derart berücksichtigt werden, dass die zwei Strahlen dennoch zuverlässig überlagert werden.

Zum Zusammenführen von Strahlen, deren Wellenlänge vorab nicht präzise bekannt ist (z.B. weil Strahlungsquellen gegeneinander austauschbar sind) und/oder deren Wellenlängenbereich breit ist (z.B. bei weitabstimmbaren Lasern), kann daher die beschriebene Ausführungsform mit zwei Keilelementen nützlich sein, um die Dispersion zumindest teilweise auszugleichen. Denn die zwei Keilelemente können vorteilhafterweise insbesondere derart relativ zueinander angeordnet sein, dass der an dem einen Keilelement dispersionsbedingt auftretende wellenlängenabhängige Winkelversatz durch den an dem zweiten Keilelement auftretende wellenlängenabhängige Winkelversatz gerade kompensiert wird. Elektromagnetische Strahlung unterschiedlicher Wellenlängen, die das erste Keilelement als paralleles Strahlenbündel in einer Eingangsrichtung erreicht hat, kann das zweite Keilelement dann wieder als paralleles Strahlenbündel und insbesondere parallel zu der Eingangsrichtung verlassen.

Zwar wird der Parallelversatz auf diese Weise nicht zwangsläufig ebenfalls kompensiert. Dies ist aber weniger wichtig, da der Parallelversatz anders als der Winkelversatz nicht zu einem räumlichen Auseinanderlaufen der unterschiedlichen Wellenlängen führt, durch das die Abweichung zwischen den Wellenlängen entlang des Strahlengangs kontinuierlich zunimmt. Ein geringer Parallelversatz kann daher, insbesondere solange die verschiedenen Wellenlängen räumlich zumindest teilweise überlappen, akzeptabel sein.

Gemäß einer weiteren vorteilhaften Ausführungsform umfasst die Kombinationsoptik als optisches Bauelement ein Keilelement, welches eine erste und eine zweite Grenzfläche aufweist, die nicht-parallel zueinander ausgerichtet sind, wobei das optische Bauelement derart angeordnet ist, dass ein erster, ein zweiter und ein dritter Strahl räumlich zusammenführbar sind, indem, insbesondere in der jeweils genannten Reihenfolge: der erste Strahl an der ersten und der zweiten Grenzfläche transmittiert wird; der zweite Strahl an der zweiten Grenzfläche reflektiert wird; der dritte Strahl an der zweiten Grenzfläche transmittiert, an der ersten Grenzfläche reflektiert und an der zweiten Grenzfläche erneut transmittiert wird; und der erste, der zweite und der dritte Strahl das optische Bauelement anschließend zu einem einzelnen Strahl zusammengeführt an der zweiten Grenzfläche verlassen.

Bei einer solchen Ausführungsform wird ein einzelnes als Keilelement ausgebildetes optisches Bauelement folglich nicht lediglich dazu genutzt, zwei Strahlen zusammenzuführen, sondern es können drei Strahlen zusammengeführt werden. Während typischerweise bei einem als Strahlteiler genutzten planparallelen oder keilförmigen Substrat lediglich an der zweiten Grenzfläche, an der der transmittierte erste Strahl austritt, ein zweiter Strahl eingespiegelt wird, wird bei dieser Ausführungsform auch die erste Grenzfläche, an der der transmittierte erste Strahl in das Substrat eintritt, zum Einspiegeln eines weiteren (dritten) Strahls genutzt. Dazu kann ähnlich der zweiten Grenzfläche auch die erste Grenzfläche in für die an der jeweiligen Grenzfläche zu transmittierenden bzw. reflektierenden Wellenlängenbereiche geeigneter Weise beschichtet sein. Durch Verwendung eines solchen optischen Bauelements, das zwei anstelle von drei Strahlen aufteilen bzw. zusammenführen kann, kann die Messvorrichtung kompakter ausgebildet sein. Dabei gilt für jeweilige optische Bauelemente der Kombinationsoptik oder auch einer Trennoptik der Messvorrichtung grundsätzlich, dass sie nicht in allen Konfigurationen der Messvorrichtung überhaupt oder in ihrem vollen Funktionsumfang tatsächlich genutzt werden müssen. So können in der Messvorrichtung beispielsweise für eine bestimmte Anzahl von Strahlungsquellen jeweilige Strahlengänge definiert sein, entlang derer jeweilige optische Bauelemente vorgesehen sind, um die Strahlengänge zusammenzuführen. In entsprechender Weise können für eine bestimmte Anzahl von Detektionsvorrichtungen jeweilige Strahlengänge definiert sein, entlang derer jeweilige optische Bauelemente vorgesehen sind, um die Strahlengänge aufzuteilen. Je nachdem, wie viele und welche Strahlungsquellen bzw. Detektionsvorrichtungen an dem Grundelement der Messvorrichtung jeweils angeordnet sind, können manche Strahlengänge und somit auch die für diese Strahlengänge vorgesehenen optischen Bauelemente ungenutzt bleiben oder nicht oder nicht vollständig gemäß ihrer zusammenführenden oder aufteilenden Funktion genutzt werden. Wenn z.B. ein Strahlteiler zum Zusammenführen zweier Strahlengänge vorgesehen ist, von denen einer in der gerade vorliegenden Konfiguration der Messvorrichtung nicht von einer Strahlungsquelle gespeist wird, dann passiert die elektromagnetische Strahlung des anderen Strahlengangs diesen Strahlteiler einfach, ohne dass sie dabei mit weiterer elektromagnetischer Strahlung zusammengeführt wird. Wenn also ein Strahlteiler wie bei der vorstehend beschriebenen Ausführungsform drei Strahlengänge zusammenführen kann, aber in der jeweiligen Konfiguration der Messvorrichtung nur zwei genutzt werden, dient der Strahlteiler in dieser Konfiguration effektiv lediglich zum Zusammenführen zweier Strahlengänge.

Gemäß einer weiteren Ausführungsform umfasst die Kombinationsoptik als optisches Bauelement ein Pentaprisma mit einer ersten, einer zweiten, einer dritten, einer vierten und einer fünften Grenzfläche, die jeweils nicht-parallel zueinander ausgerichtet sind, wobei das optische Bauelement derart angeordnet ist, dass ein erster, ein zweiter, ein dritter, ein vierter und ein fünfter Strahl räumlich zusammenführbar sind, indem, insbesondere in der jeweils genannten Reihenfolge: der erste Strahl an der ersten Grenzfläche reflektiert wird oder aber der erste Strahl an der ersten Grenzfläche transmittiert, an der zweiten bis fünften Grenzfläche reflektiert und an der ersten Grenzfläche wiederum transmittiert wird; der zweite Strahl an der zweiten Grenzfläche transmittiert, an der dritten bis fünften Grenzfläche reflektiert und an der ersten Grenzfläche transmittiert wird; der dritte Strahl an der dritten Grenzfläche transmittiert, an der vierten und fünften Grenzfläche reflektiert und an der ersten Grenzfläche transmittiert wird; der vierte Strahl an der vierten Grenzfläche transmittiert, an der fünften Grenzfläche reflektiert und an der ersten Grenzfläche transmittiert wird; der fünfte Strahl an der fünften und ersten Grenzfläche transmittiert wird; und der erste bis fünfte Strahl das optische Bauelement anschließend zu einem einzelnen Strahl zusammengeführt an der ersten Grenzfläche verlassen.

Ein solches Pentaprisma, dessen fünf Grenzflächen insbesondere nach Art eines regelmäßigen Fünfecks angeordnet sein können, ermöglicht somit das räumliche Zusammenführen von bis zu fünf Strahlen, wobei es auch zum Zusammenführen weniger Strahlen genutzt werden kann. Durch entsprechende Beschichtungen der Grenzflächen, kann eine jeweilige Grenzfläche besonders gut zum Einspiegeln elektromagnetischer Strahlung eines jeweils anderen Wellenlängenbereichs ausgebildet sein. Somit kann ein Pentaprisma besonders variabel zum Zusammenführen elektromagnetischer Strahlung unterschiedlicher Wellenlängenbereiche einsetzbar sein und unterstützt auf diese Weise die Modularität der Messvorrichtung. Beispielsweise kann ein Pentaprisma auch lediglich zum Zusammenführen von zwei oder drei Strahlen genutzt werden, wobei das Pentaprisma und die Strahlen dann je nach den Wellenlängenbereichen der Strahlen so ausgerichtet werden, dass das Einspiegeln eines jeweiligen Strahls an einer dafür geeignet beschichteten Grenzfläche des Pentaprismas erfolgt.

Gemäß einer weiteren vorteilhaften Ausführungsform ist die Kombinationsoptik dazu ausgebildet, die von den jeweiligen an dem Grundelement angeordneten Strahlungsquellen ausgesandte elektromagnetische Strahlung derart räumlich zusammenzuführen, dass der resultierende einzelne Messstrahl durch räumliches Zusammenführen zumindest zweier Kombinationsstrahlen gebildet wird, die zuvor ihrerseits durch räumliches Zusammenführen jeweils zumindest zweier Strahlen gebildet wurden. Mit anderen Worten weisen die Strahlengänge eine verzweigte Struktur auf. Denn gemäß dieser Ausführungsform werden zumindest ein erstes und ein zweites Paar Strahlen zu jeweiligen Kombinationsstrahlen räumlich zusammengeführt, die anschließend ihrerseits zu einem einzelnen Strahl räumlich zusammengeführt werden. Dabei kann jeder der vier Ausgangsstrahlen seinerseits bereits durch räumliches Zusammenführen zumindest zweier Strahlen gebildet sein und insofern selbst ein Kombinationsstrahl sein usw. Eine derart verzweigte Struktur der Strahlengänge kann ferner nicht nur für das Zusammenführen mehrerer Strahlen zu dem einzelnen Messstrahl, sondern auch für das Aufteilen des Messstrahls nach Durchlaufen der Messstrecke vorteilhaft sein.

Grundsätzlich kann das Zusammenführen mehrerer Strahlengänge auch linear erfolgen, indem ein erster Strahl mit einem zweiten Strahl räumlich zusammengeführt wird, der so gebildete Kombinationsstrahl dann mit einem dritten Strahl, der selbst kein Kombinationsstrahl ist, räumlich zusammengeführt wird und der so gebildete weitere Kombinationsstrahl gegebenenfalls mit einem vierten Strahl, der selbst kein Kombinationsstrahl ist, räumlich zusammengeführt wird usw. Beispielsweise kann dazu der jeweilige Kombinationsstrahl an einem Strahlteiler transmittiert und der jeweils neu hinzukommende Strahl an dem Strahlteiler so reflektiert werden, dass er in den Kombinationsstrahl eingespiegelt wird. Es kann aber auch umgekehrt vorgesehen sein, dass jeweils der neu hinzukommende Strahl transmittiert wird und der Kombinationsstrahl eingespiegelt wird. Grundsätzlich sind zudem auch Kombinationen dieser beiden Arten des Zusammenführens möglich.

Der Vorteil einer verzweigten Struktur der Strahlengänge gegenüber einer solchen linearen Struktur besteht insbesondere darin, dass die Anzahl der optischen Bauelemente, die ein jeweiliger Strahl beim Zusammenführen der Strahlengänge durchlaufen muss, optimiert werden kann. Bei einer linearen Struktur durchläuft der erste Strahl alle zum Zusammenführen der Strahlengänge vorgesehenen optischen Bauelemente, der zweite Strahl kann ein optisches Bauelement weniger durchlaufen, der dritte Strahl wieder eines weniger usw. Da bei jeder Transmission und Reflexion, also auch an jedem dieser optischen Bauelemente, Verluste auftreten, werden die Strahlen bei einem linearen Zusammenführen unterschiedlich stark abgeschwächt. Das macht es erforderlich, die Leistung einer jeweiligen Strahlungsquelle je nach Position innerhalb Reihenfolge, in der die Strahlengänge zusammengeführt werden, anzupassen, wodurch ein Austausch einer jeweiligen Strahlungsquelle verkompliziert wird. Bei einer, insbesondere regelmäßig, verzweigten Struktur kann dagegen vorgesehen sein, dass die Summe der Transmissionen und Reflexionen für jeden Strahlengang ausgehend von der jeweiligen Strahlungsquelle bis zur Messstrecke dieselbe ist, so dass alle Strahlengänge in zumindest ähnlicher Weise abgeschwächt werden.

Zudem können bei einer verzweigten Struktur die Anforderungen an die zum Zusammenführen der Strahlengänge verwendeten optischen Bauelemente geringer sein. Denn ein jeweiliges optisches Element, an dem ein Strahl in einen anderen Strahl eingespiegelt wird, muss zur Erzielung hoher Reflexionsgrade bzw. Transmissionsgrade in der Regel geeignet beschichtet sein. Bei einer linearen Struktur, bei der an jedem optischen Element ein weiterer Strahl mit dem Kombinationsstrahl aus allen vorangehenden Strahlen etwa durch Einspiegeln zusammengeführt wird, kann es daher erforderlich sein, zum einen eine für eine Reflexion des Wellenlängenbereichs des weiteren Strahls geeignete Beschichtung sowie zum anderen für jeden Wellenlängenbereich der in dem Kombinationsstrahl bereits zusammengeführten Strahlen eine für dessen Transmission geeignete jeweilige Beschichtung vorzusehen. Dadurch nehmen die Anforderungen an die Beschichtung mit jedem weiteren optischen Bauelement bis hin zum Messstrahl immer weiter zu. Insofern steigt die Komplexität der Beschichtung mit jedem weiteren optischen Bauelement. Da bei einer verzweigten Struktur an einem jeweiligen optischen Bauelement jeweils nur die Wellenlängenbereiche der dort zusammenlaufenden Zweige, nicht aber die Wellenlängenbereiche möglicher sonstiger Zweige berücksichtigt werden müssen und der längste Strahlengang zudem kürzer ist als bei einer linearen Struktur, ist die erforderliche Komplexität der Beschichtungen dagegen insgesamt reduziert.

Eine verzweigte Struktur ermöglicht ferner die Verwendung mehrerer polarisierender Strahlteiler innerhalb der Gesamtanordnung. Zwar kann, wie vorstehend erläutert wurde, innerhalb eines jeweiligen Strahlengangs in der Regel jeweils nur ein polarisierender Strahlteiler vorgesehen werden. Das steht aber einer Nutzung polarisierender Strahlteiler in unterschiedlichen Zweigen der verzweigten Struktur nicht entgegen. So können etwa in einem Zweig zwei Strahlen mit nahe beieinander liegenden Wellenlängen mittels eines Polwürfels zu einem ersten Kombinationsstrahl zusammengeführt werden und in einem anderen Zweig zwei weitere Strahlen mit anderen nahe beieinander liegenden Wellenlängen ebenfalls mittels eines Polwürfels zu einem zweiten Kombinationsstrahl zusammengeführt werden, wobei die beiden Kombinationsstrahlen anschließend, etwa mittels eines dichroitischen Strahlteilers, ihrerseits räumlich zusammengeführt werden können.

Gemäß einer weiteren vorteilhaften Ausführungsform umfasst die Kombinationsoptik zum räumlichen Zusammenführen der zwei Kombinationsstrahlen ein optisches Element, das insofern ein Abschlussfenster bildet, als es einen Innenraum des Grundelements von der Messstrecke mit den zu messenden Substanzen trennt. Insbesondere wird durch ein solches als Abschlussfenster ausgebildetes optisches Element, an welchem die Hauptzweige der Strahlengangstruktur zum Messstrahl zusammengeführt werden, der genannte Innenraum des Grundelements dicht gegenüber der Messstrecke abgeschlossen. Die Trennung der Messstrecke von dem genannten Innenraum hat den Vorteil, dass der Innenraum für die in der Messstrecke befindlichen zu messenden Substanzen nicht zugänglich ist und so etwa vor Verunreinigungen oder bei aggressiven Substanzen auch vor Beschädigungen geschützt werden kann.

Gemäß einer weiteren vorteilhaften Ausführungsform weist einer der zwei Kombinationsstrahlen Wellenlängen im Bereich nahinfraroter (NIR) Strahlung - und insbesondere keine Wellenlängen im Bereich mittelinfraroter (MIR) Strahlung - auf und weist der andere Kombinationsstrahl Wellenlängen im Bereich mittelinfraroter (MIR) Strahlung - und insbesondere keine Wellenlängen im Bereich nahinfraroter (NIR) Strahlung - auf. Mit anderen Worten sind die zwei Hauptzweige der verzweigten Strahlengangstruktur, die als zwei Kombinationsstrahlen zu dem Messstrahl zusammengeführt werden, bezüglich ihrer jeweiligen Wellenlängenbereiche nach Strahlung im mittelinfraroten Bereich und Strahlung im nahinfraroten Bereich getrennt. Bei welcher Wellenlänge der Übergang zwischen diesen Bereiche konkret liegt, kann dabei durch das zum Zusammenführen des NIR-Zweigs und des MIR-Zweigs verwendete optische Bauelement, insbesondere durch dessen Bandkante, definiert sein.

Gemäß einer vorteilhaften Weiterbildung ist der Wellenlängen im Bereich nahinfraroter (NIR) Strahlung aufweisende Kombinationsstrahl durch räumliches Zusammenführen zweier Strahlen gebildet, von denen einer Wellenlängen im Bereich kurzwelliger nahinfraroter (SWNIR) Strahlung - und insbesondere keine Wellenlängen im Bereich langwelliger nahinfraroter (LWNIR) Strahlung - aufweist und der andere Wellenlängen im Bereich langwelliger nahinfraroter (LWNIR) Strahlung - und insbesondere keine Wellenlängen im Bereich kurzwelliger nahinfraroter (SWNIR) Strahlung - aufweist. Die einzelnen Zweige können grundsätzlich immer weiter in jeweilige Wellenlängenteilbereiche aufgeteilt sein, wobei vorzugsweise die Wellenlängenbereiche von Zweigen, die zusammengeführt werden, voneinander disjunkt sind. Zudem können die Grenzen zwischen den Wellenlängenbereichen der verschiedenen Zweige grundsätzlich auch an anderen Stellen verlaufen als vorstehend angegeben.

Eine Aufteilung jeweiliger Zweige der verzweigten Strahlengangstruktur nach Wellenlängenbereichen ermöglicht es, in dem jeweiligen Zweig optische Bauelemente vorzusehen, die für den jeweiligen Wellenlängenbereich speziell geeignet sind. So können beispielsweise im SWNIR-Zweig Substrate verwendet werden, die speziell bei kurzwelligen nahinfraroten Wellenlängen hohe Transmissionsgrade aufweisen und dabei vorzugsweise vergleichbar günstig sind, wie etwa Borosilikat-Kronglas. Als Substrat mit hohem Transmissionsgrad im LWNIR-Zweig kann dagegen beispielsweise Quarzglas verwendet werden. Insbesondere brauchen speziellere und somit teurere MIR-transmissive Materialien, wie etwa Zinkselenid (ZnSe) lediglich im MIR-Zweig vorgesehen zu werden.

Vorzugsweise ist die Kombinationsoptik hinsichtlich der verzweigten Struktur der Strahlengänge und der verwendeten optischen Bauelemente derart ausgebildet, dass für eine Vielzahl verschiedener Wellenlängenbereiche, die zusammen einen weiten Wellenlängenbereich, insbesondere von etwa 750 nm bis etwa 12 µm, vorzugsweise zumindest im Wesentlichen nahtlos abdecken, ein jeweiliger Strahlengang zur Verfügung steht. Das Grundelement kann dann derart ausgebildet sein, dass an jeden Strahlengang eine jeweilige Strahlungsquelle angeordnet werden kann. Dabei können die jeweiligen Wellenlängenbereiche der einzelnen Strahlengänge insbesondere so gewählt sein, dass sie Wellenlängenbereichen typischer Strahlungsquellen entsprechen und/oder insgesamt eine Vielzahl von Absorptionslinien typischer zu messender Substanzen abdecken. Bekannte Paare nah beieinanderliegender Absorptionslinien, wie etwa 1280 nm/1390 nm, 1510 nm/1560 nm, 1560 nm/1570 nm, 1740 nm/1650 nm und/oder 2320 nm/2360 nm, können dabei von vornherein etwa dadurch berücksichtigt werden, dass für jeweils beide Absorptionslinien ein eigener Zweig vorgesehen wird, und zum räumlichen Zusammenführen der jeweils zwei Zweige ein speziell für nah beieinanderliegende Wellenlängenbereiche geeignetes optisches Bauelement vorgesehen wird.

Gemäß einer weiteren vorteilhaften Ausführungsform umfasst die Kombinationsoptik zum räumlichen Zusammenführen der zwei Kombinationsstrahlen ein optisches Element, das als geometrischer Strahlteiler ausgebildet ist. Ein geometrischer Strahlteiler kann insbesondere vorteilhaft sein, wenn von den zusammenzuführenden Kombinationsstrahlen der eine Kombinationsstrahl Wellenlängen im Bereich nahinfraroter (NIR) Strahlung und der andere Kombinationsstrahl Wellenlängen im Bereich mittelinfraroter (MIR) Strahlung umfasst. Denn die Strahlaufteilung bzw. -zusammenführung kann bei einem geometrischen Strahlteiler zumindest im Wesentlichen unabhängig von der jeweiligen Wellenlänge sein. Auf diese Weise braucht zum Zusammenführen eines NIR-Zweigs und eines MIR-Zweigs oder zweier sonstiger Zweige mit verschiedenen Wellenlängenbereichen kein komplexes optisches Bauelement verwendet zu werden, dessen Substrat und Beschichtungen an den gesamten Wellenlängenbereich der zusammenzuführenden Zweige geeignet angepasst sein müssen. Der geometrische Strahlteiler kann dabei konventionell oder auch als mikro-(opto-)elektro-mechanisches System ausgebildet sein.

Gemäß einer weiteren vorteilhaften Ausführungsform umfasst die Messvorrichtung eine Trennoptik, die unabhängig davon, welche Strahlungsquellen aus der Vielzahl verschiedener Strahlungsquellen an dem Grundelement jeweils angeordnet sind, dazu ausgebildet ist, den Messstrahl nach Durchlaufen der Messstrecke in Teilstrahlen unterschiedlicher Wellenlängenbereiche räumlich aufzuteilen, um die Teilstrahlen in Richtung verschiedener für den jeweiligen Wellenlängenbereich spezifischer Detektionsvorrichtungen auszugeben. Dabei können die Detektionsvorrichtungen an der Messvorrichtung dauerhaft vorgesehen sein oder je nach Bedarf in modularer Weise anordenbar sein. Die Trennoptik stellt das funktionale Gegenstück zur Kombinationsoptik dar. Während die Kombinationsoptik mehrere Strahlengänge letztlich zu einem einzelnen Messstrahl zusammenführen kann, kann der Messstrahl anschließend mittels der Trennoptik wieder auf mehrere Strahlengänge aufgeteilt werden, um die elektromagnetische Strahlung in Abhängigkeit von ihrer jeweiligen Wellenlänge zu verschiedenen Detektionsvorrichtungen zu leiten.

Dabei braucht der Messstrahl nicht sozusagen spiegelbildlich dazu, wie er durch Zusammenführen von Strahlengängen gebildet wurde, wieder in Strahlengänge aufgeteilt zu werden. Grundsätzlich kann die Trennoptik zwar entsprechende oder gleichartige optische Bauelemente wie die Kombinationsoptik umfassen, die dann insbesondere tatsächlich als Strahlteiler anstatt als Strahlkombinierer verwendet werden. Daher können insbesondere auch Ausführungsformen vorgesehen sein, bei denen die Trennoptik entsprechend zu vorstehend bezüglich der Kombinationsoptik beschriebenen Ausführungsformen ausgebildet ist. Allerdings muss die Anzahl der Strahlengänge, in die der Messstrahl aufgeteilt wird, nicht der Anzahl der Strahlengänge entsprechen, die zu dem Messstrahl zusammengeführt wurden. Zudem brauchen die Wellenlängenbereiche der Strahlengänge, in die der Messstrahl aufgeteilt wird, nicht jeweils einem Wellenlängenbereich eines Strahlengangs zu entsprechen, der zu dem Messstrahl beiträgt.

Insbesondere können die Art und die Zahl der Detektionsvorrichtungen grundsätzlich unabhängig davon sein, wie viele und was für Strahlungsquellen an dem Grundelement der Messvorrichtung anordenbar oder tatsächlich angeordnet sind. Denn beispielsweise kann vorgesehen sein, dass von verschiedenen gegebenenfalls an dem Grundelement angeordneten Strahlungsquellen ausgesandte elektromagnetische Strahlung unterschiedlicher Wellenlängenbereiche nach Durchlaufen der Messstrecke mittels derselben Detektionsvorrichtung erfasst wird. Sofern die Detektionsvorrichtung nicht dazu ausgebildet ist, die Wellenlängen selbständig zu unterscheiden, kann eine Zuordnung der erfassten Strahlung zu einer jeweiligen Wellenlänge bzw. zu einer jeweiligen Strahlungsquelle beispielsweise durch Zeitmultiplexing oder anhand unterschiedlicher Modulationsfrequenzen der Strahlungsquellen erfolgen.

Beim Zeitmultiplexing können die Strahlungsquellen, deren elektromagnetische Strahlung mittels derselben Detektionsvorrichtung erfasst wird, regelmäßig oder gemäß einem bestimmten Muster zeitlich alternierend Strahlung aussenden, so dass anhand des Erfassungszeitpunkts an der Detektionsvorrichtung die jeweils aussendende Strahlungsquelle identifiziert werden kann. Alternativ oder zusätzlich können die zu unterscheidenden Strahlungsquellen mit unterschiedlichen Modulationsfrequenzen moduliert betrieben werden. Anhand der jeweiligen Modulationsfrequenz kann dann das auf die entsprechenden Strahlungsquelle zurückzuführende Signal aus dem Gesamtsignal herausgefiltert werden.

Vorzugsweise umfasst die Trennoptik zumindest ein optisches Bauelement, das dazu ausgebildet ist, als ein einzelner Strahl auf das optische Bauelement treffende elektromagnetische Strahlung in zumindest zwei, insbesondere drei, vier oder fünf, Teilstrahlen unterschiedlicher Wellenlängenbereiche räumlich aufzuteilen und in jeweils verschiedene Richtung auszugeben. Die genannte elektromagnetische Strahlung kann insbesondere als ein aus der jeweiligen Strahlung verschiedener Strahlungsquellen kombinierter Strahl auf das optische Bauelement treffen. Beispielsweise handelt es sich bei der Strahlung um den Messstrahl. Bei derartigen optischen Bauelementen handelt es sich somit insbesondere um Strahlteiler im eigentlichen Wortsinn, die also tatsächlich zum Aufteilen eines Strahls in zwei oder mehr separate Strahlengänge genutzt werden. Ein solches optisches Bauelement kann dabei grundsätzlich identisch zu einem der vorstehend bezüglich der Funktion als Strahlkombinierer beschriebenen optischen Bauelemente ausgebildet sein.

Beispielsweise kann das optische Bauelement als dichroitischer Strahlteiler, als polarisierender Strahlteiler, insbesondere Polwürfel, als Volumen-Bragg-Gitter oder als geometrischer Strahlteiler ausgebildet sein. Bei dem genannten Polwürfel handelt es sich vorzugsweise um einen Polwürfel mit nicht-parallelen Oberflächen. Der genannte geometrische Strahlteiler kann beispielsweise als verstellbarer geometrischer Strahlteiler ausgebildet sein und ein mikro-opto-elektro-mechanisches System umfassen.

Ferner kann die Trennoptik als optisches Bauelement zwei Keilelemente umfassen, die jeweils zwei nicht-parallele Grenzflächen aufweisen und so zueinander angeordnet sind, dass durch die vier Grenzflächen transmittierte elektromagnetische Strahlung einen von der jeweiligen Wellenlänge unabhängigen Winkelversatz erfährt, insbesondere zumindest im Wesentlichen keinen Winkelversatz erfährt, sondern höchstens parallelversetzt wird. Zudem kann die Trennoptik als optisches Bauelement ein Keilelement mit einer ersten und einer zweiten Grenzfläche umfassen, die nicht-parallel zueinander ausgerichtet sind, wobei mittels des optischen Bauelements ein Ausgangsstrahl in einen ersten, einen zweiten und einen dritten Strahl aufteilbar ist. Dabei erfolgt die Aufteilung in Entsprechung zum weiter oben beschriebenen Zusammenführen dreier Strahlen mittels eines Keilelements der Kombinationsoptik.

Des Weiteren kann die Trennoptik ein wie vorstehend beschriebenes Pentaprisma umfassen. Ferner kann ein optisches Bauelement der Trennoptik als Pentaprisma mit einer ersten, einer zweiten, einer dritten, einer vierten und einer fünften Grenzfläche ausgebildet sein, die jeweils nicht-parallel zueinander ausgerichtet sind, wobei das optische Bauelement derart angeordnet ist, dass ein Ausgangsstrahl, insbesondere der Messstrahl, in einen ersten, einen zweiten, einen dritten, einen vierten und einen fünften Strahl aufteilbar ist, indem der Ausgangsstrahl an der ersten Grenzfläche zumindest teilweise transmittiert wird und dadurch in das Pentaprisma eindringt und anschließend an der zweiten bis fünften Grenzfläche jeweils teilweise transmittiert und teilweise reflektiert wird, wobei der erste Strahl durch einen an der ersten Grenzfläche reflektierten oder einen nach Reflexion an der fünften Grenzfläche an der ersten Grenzfläche transmittierten Anteil des Ausgangsstrahls gebildet wird, der zweite Strahl durch einen an der zweiten Grenzfläche transmittierten Anteil des Ausgangsstrahls gebildet wird, der dritte Strahl durch einen an der dritten Grenzfläche transmittierten Anteil des Ausgangsstrahls gebildet wird, der vierte Strahl durch einen an der vierten Grenzfläche transmittierten Anteil des Ausgangsstrahls gebildet wird, und der fünfte Strahl durch einen an der fünften Grenzfläche transmittierten Anteil des Ausgangsstrahls gebildet wird.

Dabei sind die Grenzflächen des Pentaprismas insbesondere nach Art eines regelmäßigen Fünfecks angeordnet und vorzugsweise derart beschichtet, dass die fünf Strahlen, in die der Ausgangsstrahl zerlegt wird, Wellenlängen zumindest im Wesentlichen disjunkter Wellenlängenbereiche aufweisen. Die fünf Strahlen können dann zu jeweiligen Detektionsvorrichtungen geführt werden, wo sie dann detektiert werden können. Bei einer besonders kompakten, aber vielfältig modular einsetzbaren Ausführungsform der Messvorrichtung kann vorgesehen sein, dass die Trennoptik zum Aufteilen des Messstrahls in Strahlen verschiedener Wellenlängenbereiche im Wesentlichen ausschließlich ein solches Pentaprisma umfasst. Das kann bei geeigneter Wahl von fünf verschiedenen Detektionsvorrichtungen und jeweiliger Wellenlängenbereiche der aufgeteilten Strahlen ausreichen, mittels der Messvorrichtung Absorptionen über einen weiten gesamten Wellenlängenbereich, insbesondere von etwa 750 nm bis etwa 12 µm, zu ermöglichen. Dabei braucht der Messstrahl nicht für jede Anwendung tatsächlich in fünf Strahlen aufgeteilt zu werden. Vielmehr kann die Zahl der tatsächlich erzeugten Strahlen von den Wellenlängenbereichen der für eine jeweilige Anwendung verwendeten Strahlungsquellen abhängen.

Dabei kommen als Detektionsvorrichtungen insbesondere für Wellenlängen im Bereich von etwa 700 nm bis etwa 1100 nm beispielsweise Si-Detektoren, insbesondere für Wellenlängen im Bereich von etwa 1100 nm bis 1700 nm beispielsweise InGaAs-Detektoren - wobei spezielle InGaAs-Detektoren auch für verschiedene Bereiche zwischen 1700 nm und 2600 nm geeignet sein können -, insbesondere für Wellenlängen im Bereich um etwa 3500 nm beispielsweise InAs-Detektoren, und für Wellenlängen im mittelinfraroten (MIR) Bereich beispielsweise HgCdTe-Detektoren (sogenannte MCT-Detektoren) in Betracht.

Die Struktur des Aufteilens des Messstrahls in mehrere Strahlen, die entlang unterschiedlicher Strahlengänge geführt werden, kann grundsätzlich linear ausgebildet sein, so dass aus dem Messstrahl wiederholt ein Strahl mit elektromagnetischer Strahlung eines jeweiligen Wellenlängenbereichs abgetrennt wird, der dann nicht mehr weiter aufgeteilt wird. Vorzugsweise ist die Struktur der Strahlengänge bei der Aufteilung allerdings verzweigt, so dass bereits abgetrennte Strahlen noch weiter aufgeteilt werden. Die Vorteile einer solchen Struktur ergeben sich analog zu den Vorteilen einer verzweigten Struktur für das Zusammenführen mehrere Strahlengänge.

Dasjenige optische Bauelement der Trennoptik, auf das der Messstrahl nach Durchlaufen der Messstrecke als erstes trifft, ist vorzugweise als Abschlussfenster ausgebildet. Auf diese Weise können die der Messstrecke nachgeordneten Strahlengänge und die Detektionsvorrichtungen zuverlässig von der Messstrecke und den darin enthaltenen zu messenden Substanzen getrennt werden.

Ähnlich der Kombinationsoptik kann auch die Trennoptik insofern modular ausgebildet sein, als sie mehrere Teiloptiken umfassen, die miteinander nach Bedarf kombinierbar sind. Eine jeweilige Teiloptik kann dabei einzeln jeweils gemäß einer der vorstehend für die gesamte Trennoptik beschriebenen Ausführungsformen ausgebildet sein.

Gemäß einer vorteilhaften Ausführungsform ist das Grundelement ferner dazu ausgebildet, dass zumindest zwei Detektionsvorrichtungen zugleich an dem Grundelement angeordnet werden können, die aus einer Vielzahl sich bezüglich ihres jeweiligen Wellenlängenbereichs unterscheidender Detektionsvorrichtungen auswählbar sind. Somit kann die Messvorrichtung auch hinsichtlich der Detektionsvorrichtungen modular ausgebildet sein. Die Modularität kann wiederum zu einer vereinfachten Herstellung der Messvorrichtung beitragen, indem derselbe Grundaufbau, insbesondere dasselbe Grundelement, dieselbe Kombinationsoptik und dieselbe Trennoptik, in Verbindung mit verschiedenen Sätzen von an dem Grundelement jeweils angeordneten Detektionsvorrichtungen verwendet werden können, so dass auf diese Weise eine Vielzahl verschiedener Varianten der Messvorrichtung realisiert werden können. Die Modularität kann aber auch für einen Endanwender nutzbar sein, wenn etwa vorgesehen ist, dass sich die Detektionsvorrichtungen einfach austauschen lassen, so dass je nach Bedarf für eine jeweilige Anwendung ein jeweils geeigneter Satz von Detektionsvorrichtungen an das Grundelement angeordnet werden kann und gegebenenfalls nicht benötigte Detektionsvorrichtungen weggelassen werden können.

Gemäß einer bevorzugten Ausführungsform sind die Strahlungsquellen der genannten Vielzahl verschiedener Strahlungsquellen insgesamt dazu ausgebildet, elektromagnetische Strahlung mit Wellenlängen in einem Bereich von etwa 750 nm bis etwa 12000 nm auszusenden. Grundsätzlich sind auch andere Wellenlängenbereiche denkbar, die vorzugsweise aber eine Breite von zumindest 500 nm, bevorzugt von zumindest 3000 nm, insbesondere von zumindest 8000 nm, aufweisen. Damit die Kombinationsoptik unabhängig davon, welche Strahlungsquellen aus der Vielzahl verschiedener Strahlungsquellen an dem Grundelement jeweils angeordnet sind, die von den jeweiligen an dem Grundelement angeordneten Strahlungsquellen ausgesandte elektromagnetische Strahlung räumlich zusammenführen kann, muss die Kombinationsoptik (und gegebenenfalls ebenso die Trennoptik) für den gesamten mittels der Vielzahl von Strahlungsquellen realisierbaren Wellenlängenbereich geeignet ausgebildet sein. In entsprechender Weise sind auch gegebenenfalls vorgesehene Detektionsvorrichtungen insgesamt dazu ausgebildet, elektromagnetische Strahlung mit Wellenlängen in einem Bereich von etwa 750 nm bis etwa 12000 nm, zumindest aber in einen Wellenlängenbereich mit einer Breite von zumindest 500 nm, bevorzugt von zumindest 3000 nm, insbesondere von zumindest 8000 nm, zu detektieren. Derartige Vorgaben können dabei insbesondere durch Verwendung der beschriebenen optischen Bauelemente und/oder die verzweigte Struktur der Strahlengänge erreicht werden. Denn auf diese Weise können an der Messvorrichtung für eine Vielzahl von Wellenlängenbereichen jeweilige Anschlussmöglichkeiten zur Anordnung entsprechender Strahlungsquellen bzw. entsprechender Detektionsvorrichtungen vorgesehen sein.

Vorzugsweise ist die Messvorrichtung dazu ausgebildet, dass mindestens 3, bevorzugt mindestens 5, insbesondere mindestens 8, Strahlungsquellen für ein gleichzeitiges Aussenden jeweiliger elektromagnetischer Strahlung an dem Grundelement angeordnet werden können. In vergleichbarer Weise kann es bevorzugt sein, wenn die Messvorrichtung dazu ausgebildet ist, dass mindestens 3, bevorzugt mindestens 5, insbesondere mindestens 8, Detektionsvorrichtungen zugleich an dem Grundelement angeordnet werden können. Eine solche Anzahl grundsätzlich an der Messvorrichtung verwendbarer verschiedener Strahlungsquellen bzw. verschiedener Detektionsvorrichtungen ermöglicht eine hohe Variabilität der modularen Messvorrichtung.

Die eingangs genannte Aufgabe wird zudem gelöst durch eine Messvorrichtung mit den Merkmalen des Anspruchs 14.

Diese Messvorrichtung zur gleichzeitigen spektroskopischen Messung mehrerer Substanzen, insbesondere mehrerer Gase, anhand jeweiliger wellenlängenabhängiger Absorption ausgesandter elektromagnetischer Strahlung durch die Substanzen, umfasst ein Grundelement und eine Trennoptik und ist insofern modular, als das Grundelement dazu ausgebildet ist, dass zumindest zwei Detektionsvorrichtungen zugleich an dem Grundelement angeordnet werden können, die aus einer Vielzahl sich bezüglich ihres jeweiligen Wellenlängenbereichs unterscheidender Detektionsvorrichtungen auswählbar sind, und insofern, als die Trennoptik unabhängig davon, welche Detektionsvorrichtungen aus der Vielzahl verschiedener Detektionsvorrichtungen an dem Grundelement jeweils angeordnet sind, dazu ausgebildet ist, einen Messstrahl in Teilstrahlen unterschiedlicher Wellenlängenbereiche räumlich aufzuteilen, um die Teilstrahlen in Richtung verschiedener für den jeweiligen Wellenlängenbereich spezifischer Detektionsvorrichtungen auszugeben.

Dabei kann diese weitere erfindungsgemäße Messvorrichtung zumindest im Wesentlichen wie die davor beschriebene Messvorrichtung ausgebildet sein, insbesondere wie eine derjenigen der vorstehend beschriebenen Ausführungsformen, die sowohl eine Kombinationsoptik auch als auch eine Trennoptik aufweisen. Allerdings werden bei dieser weiteren Messvorrichtung anders als bei der davor beschriebenen Messvorrichtung die Möglichkeit, verschiedene Strahlungsquellen an dem Grundelement anzuordnen, und das Vorsehen einer Kombinationsoptik nicht zwingend vorausgesetzt. Mit anderen Worten kann die vorliegende weitere Messvorrichtung auch lediglich hinsichtlich der Anordnung verschiedener Detektionsvorrichtungen, nicht aber hinsichtlich der Anordnung verschiedener Strahlungsquellen modular sein, und/oder lediglich eine Trennoptik, nicht aber eine Kombinationsoptik aufweisen.

Somit kann diese weitere Messvorrichtung, die keine Kombinationsoptik voraussetzt, z.B. mit einer Strahlungsquelle, wie etwa einem Laserarray, verwendet werden, die elektrische Strahlung mehrerer verschiedener Wellenlängen bzw. Wellenlängenbereiche bereits kombiniert ausgibt, so dass keine gesonderte Kombinationsoptik benötigt wird. Auch die Austauschbarkeit einer solchen Strahlungsquelle oder die Anordnung weiterer Strahlungsquellen kann dann entbehrlich sein, wobei beides grundsätzlich auch bei der vorliegenden Messvorrichtung vorgesehen sein kann.

Mögliche Ausführungsformen der vorliegenden Messvorrichtung mit Trennoptik können den weiter oben für die Messvorrichtung mit Kombinationsoptik beschriebenen Ausführungsformen zumindest im Wesentlichen entsprechen und dann ähnliche Vorteile aufweisen. Zur Übertragung einer Ausführungsform der weiter oben beschriebenen Messvorrichtung mit Kombinationsoptik auf die vorliegende Messvorrichtung mit Trennoptik braucht dabei in der Regel lediglich die kombinierende Funktion der Kombinationsoptik bzw. eines optischen Bauteils der Kombinationsoptik durch funktionale Umkehrung zu einer entsprechenden trennenden Funktion der Trennoptik bzw. eines optischen Bauteils der Trennoptik umgewandelt zu werden. Die obigen Ausführungen zu möglichen Ausbildungen der Trennoptik bzw. der Detektionsvorrichtungen einer Messvorrichtung, die sowohl eine Kombinationsoptik als auch eine Trennoptik aufweist, lassen sich auch direkt auf die vorliegende Messvorrichtung, die lediglich eine Trennoptik, aber keine Kombinationsoptik voraussetzt, übertragen, so dass sich daraus weitere vorteilhafte Ausführungsformen der vorliegenden Messvorrichtung ergeben.

Die Erfindung umfasst insofern auch Messvorrichtungen, die gemäß Anspruch 14 oder Anspruch 15 ausgebildet sind, wobei die Trennoptik entsprechend - insbesondere im Sinne einer funktionalen Umkehrung - einer der in den Ansprüchen 4 bis 10 beschriebenen Kombinationsoptiken ausgebildet ist.

Aspekte der Erfindung werden nachfolgend lediglich beispielhaft unter Bezugnahme auf die Figuren näher erläutert.
- Fig. 1: zeigt zwei Ausführungsformen eines jeweiligen optischen Bauelements der Kombinationsoptik einer erfindungsgemäßen Messvorrichtung in schematischer Darstellung.
- Fig. 2 und 3: zeigen weitere Ausführungsformen eines optischen Bauelements der Kombinationsoptik einer erfindungsgemäßen Messvorrichtung in schematischer Darstellung.
- Fig. 4: zeigt eine Ausführungsform eines optischen Bauelements einer Trennoptik einer erfindungsgemäßen Messvorrichtung in schematischer Darstellung.
- Fig. 5 und 6: zeigen alternative Strukturen jeweiliger Strahlengänge innerhalb der Kombinationsoptik einer erfindungsgemäßen Messvorrichtung in schematischer Darstellung.
- Fig. 7: zeigt eine tabellarische Übersicht über an den in den Fig. 5 bzw. 6 gezeigten Strahlteilern vorzusehende Beschichtungen.
- Fig. 8: zeigt in schematischer Darstellung den Aufbau eines Teils einer Ausführungsform einer erfindungsgemäßen Messvorrichtung.
- Fig. 9: zeigt eine weitere Ausführungsform eines optischen Bauelements der Kombinationsoptik einer erfindungsgemäßen Messvorrichtung in schematischer Darstellung.
- Fig. 10: zeigt eine Ausführungsform einer erfindungsgemäßen Messvorrichtung in schematischer Darstellung.

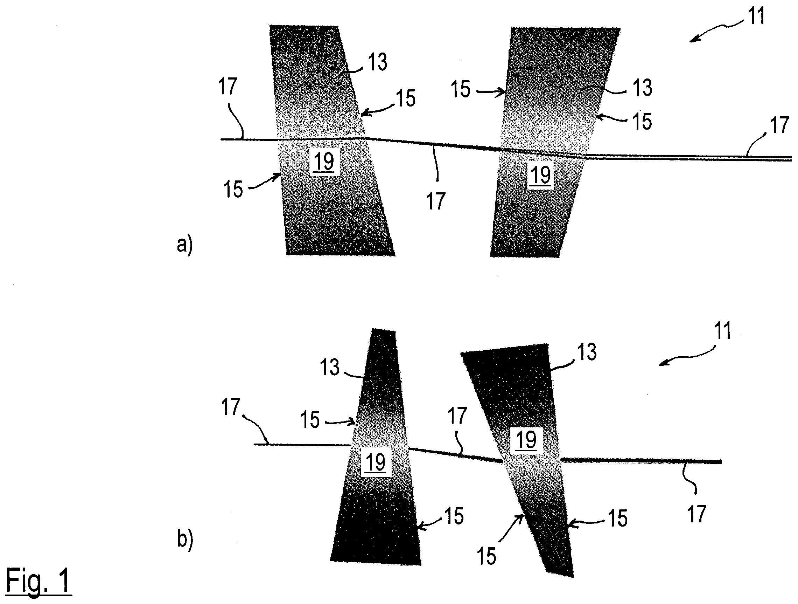

In Fig. 1 sind in schematischer Darstellung zwei unterschiedliche Ausführungsformen eines optischen Bauelements 11 gezeigt, wobei den beiden optischen Bauelementen 11 gemein ist, dass sie jeweils als zwei Keilelemente 13 ausgebildet sind. Jedes Keilelement 13 weist zwei Grenzflächen 15 auf, die nicht-parallel zueinander angeordnet sind, wobei die Keilelemente 13 jeweils derart angeordnet sind, dass zumindest ein Strahl 17 mit elektromagnetischer Strahlung beide Keilelemente 13 durchläuft und dabei die genannten jeweils zwei Grenzflächen 15 passiert. Die Ausbreitungsrichtung ist dabei sowohl in Fig. 1a) als auch in Fig. 1b) von links nach rechts.

Die beiden Keilelemente 13 umfassen ein Substrat 19, das einen größeren Brechungsindex als Luft aufweist. Daher wird der Strahl 17, der elektromagnetische Strahlung verschiedener Wellenlängen umfasst, an den Grenzflächen 15 gebrochen. Da der Brechungsindex des Substrats 19 wellenlängenabhängig ist, werden Anteile unterschiedlicher Wellenlänge unterschiedlich stark gebrochen. Das hat zur Folge, dass der Strahl 17 beim Durchlaufen der beiden Keilelemente 13 jeweils aufgeweitet wird. In den Fig. 1 a) und 1 b)sind dabei jeweils Anteile des Strahls 17 mit einer größten und mit einer kleinsten Wellenlänge dargestellt. Bei der Ausführungsform der Fig. 1 a) sind diese Anteile nach Durchlaufen des optischen Bauelement 11 geringfügig voneinander beabstandet, während sie bei der Ausführungsform der Fig. 1b) noch überlappen.

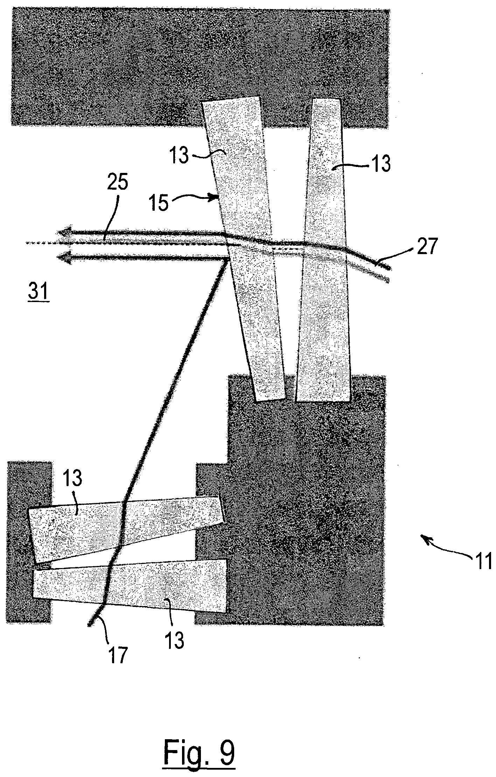

Allerdings sind die zwei Grenzflächen 15 eines jeweiligen Keilelements 13 sowie die beiden Keilelemente 13 jeweils zueinander derart angeordnet, dass die Anteile mit verschiedenen Wellenlängen das optische Bauelement 11 letztlich parallel zueinander ausgerichtet, also mit demselben Winkelversatz, verlassen. Insbesondere sind die beiden Grenzflächen 15 des einen Keilelements 13 dazu in demselben relativen Winkel zueinander angeordnet wie die beiden Grenzflächen 15 des anderen Keilelements 13, wobei grundsätzlich auch andere Anordnungen möglich sind. Bei den beiden in Fig. 1 gezeigten Ausführungsformen beträgt der wellenlängenunabhängige Winkelversatz 0°, so dass der Strahl 17 das jeweilige optische Bauelement 11 parallel zu der Richtung, in der er das optische Bauelement 11 erreicht hat, wieder verlässt. Je nach relativer Anordnung der Keilelemente 13 zueinander, kann der Strahl das optische Bauelement 13 aber auch mit einem anderen wellenlängenunabhängigen Winkelversatz verlassen (vgl. z.B. Fig. 9). Durch schmal ausgebildete Keilelemente 13, deren Grenzflächen 15 einen geringen Abstand voneinander aufweisen, so dass die Wegstrecke durch das Substrat 19 jeweils kurz ist, kann dabei der wellenlängenabhängige Parallelversatz gering gehalten werden.

Um die Transmission des gezeigten Strahls 17 durch die Keilelemente 13 zu optimieren, können die Grenzflächen 15 jeweils eine Beschichtung aufweisen, durch die eine Reflexion des Strahls 17 unterdrückt und die Transmission unterstützt wird, so dass möglichst über den gesamten Wellenlängenbereich des Strahls 17 hohe Transmissionsgrade erreicht werden. Auf diese Weise können Verluste infolge des Durchlaufens des optischen Bauelements 13 gering gehalten werden.

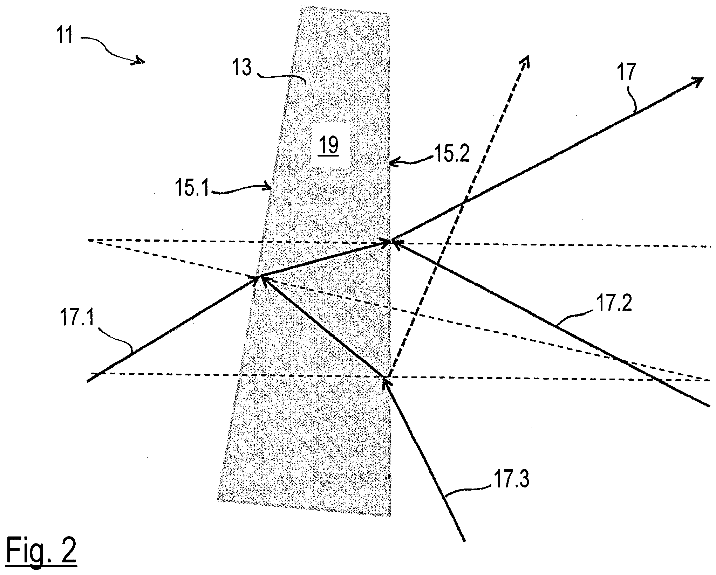

Die in Fig. 2 gezeigte Ausführungsform eines optischen Bauelements 11 ist als ein Keilelement 13 ausgebildet. Dabei kann das optische Bauelement 11 auch noch weitere Elemente, insbesondere auch wie bei den Ausführungsformen der Fig. 1 noch ein weiteres Keilelement 13, umfassen. Die Fig. 2 zeigt exemplarisch, wie an einem solchen optischen Bauelement 11 insgesamt drei Strahlen 17.1, 17.2, 17.3 räumlich zusammengeführt werden können, wobei die dünnen unterbrochenen Linien die Lote auf die beiden Grenzflächen 15.1, 15.2 des Keilelements 13 kennzeichnen.

Für das Zusammenführen der Strahlen 17.1, 17.2, 17.3 durchläuft der erste Strahl 17.1 das Keilelement 13 und wird also an der ersten Grenzfläche 15.1 ebenso wie an der zweiten Grenzfläche 15.2 des Keilelements 13 im Wesentlichen vollständig transmittiert. An beiden Grenzflächen 15.1, 15.2 wird dabei der von der jeweils anderen Seite auf die jeweilige Grenzfläche 15.1, 15.2 treffende zweite bzw. dritte Strahl 17.2, 17.3 derart reflektiert, dass er in den transmittierten ersten Strahl 17.1 eingespiegelt wird, so dass letztlich der erste, der zweite und der dritte Strahl 17.1, 17.2, 17.3 räumlich zusammengeführt als ein gemeinsamer Strahl 17 das optische Bauelement 13 verlassen.

Während der zweite Strahl 17.2 dabei direkt an der zweiten Grenzfläche 15.2 reflektiert werden kann, muss der dritte Strahl 17.3, um an der ersten Grenzfläche 15.1 reflektiert werden zu können, zunächst an der zweiten Grenzfläche 15.2 transmittiert werden. Mögliche Verluste durch Reflexion des dritten Strahls 17.3 an der zweiten Grenzfläche 15.2 sind dabei als unterbrochener Pfeil dargestellt. Ähnlich den exemplarischen Ausführungsformen der Fig. 1 können auch bei diesem Keilelement 13 die Grenzflächen 15.1, 15.2 beschichtet sein, um hohe Transmissionsgrade für den ersten Strahl 17.1 an der ersten und zweiten Grenzfläche 15.1, 15.2, einen hohen Reflexionsgrad für den zweiten Strahl 17.2 an der zweiten Grenzfläche 15.2, einen hohen Transmissionsgrad für den dritten Strahl 17.3 an der zweiten Grenzfläche 15.2 und einen hohen Reflexionsgrad für den dritten Strahl 17.3 an der ersten Grenzfläche 15.1 zu erzielen.

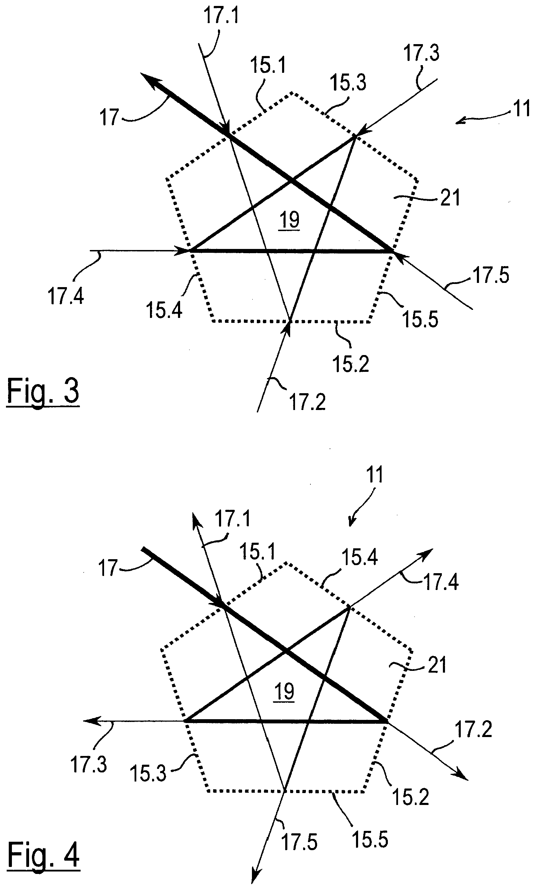

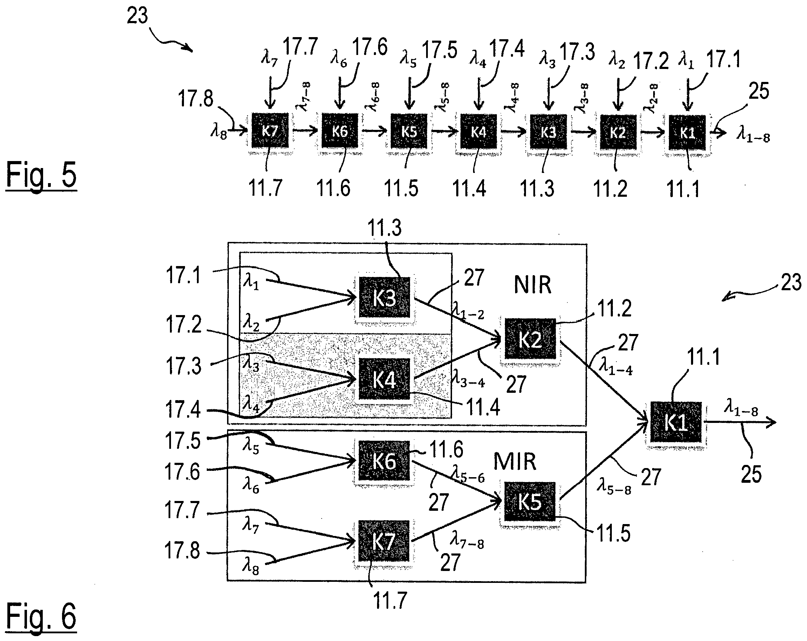

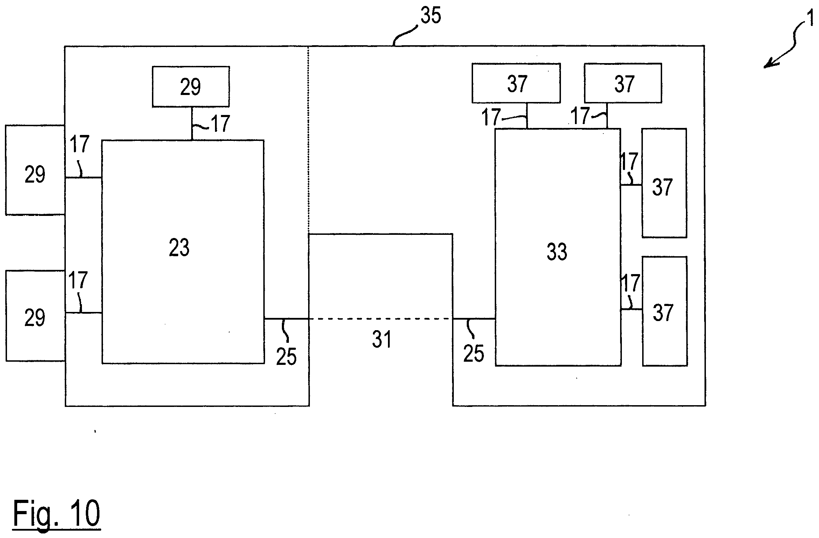

In den Fig. 3 und 4 ist jeweils ein als Pentaprisma 21 ausgebildetes optisches Bauelement 11 in schematischer Darstellung gezeigt. Der grundlegende Aufbau der beiden Pentaprismen 21 ist dabei zumindest im Wesentlichen identisch. Insbesondere umfasst das Pentaprisma 21 jeweils ein Substrat 19, das einen größeren Brechungsindex als Luft aufweist. Allerdings unterscheiden sich die Pentaprismen 21 hinsichtlich ihrer jeweils dargestellten Funktion. Das in Fig. 3 gezeigte Pentaprisma ist Teil der Kombinationsoptik 23 (vgl. z.B. Fig. 5 und 6) einer erfindungsgemäßen Messvorrichtung 1 (vgl. Fig. 10) und ist insofern dazu ausgebildet einen ersten, einen zweiten, einen dritten, einen vierten und einen fünften Strahl 17.1, 17.2, 17.3, 17.4, 17.5 räumlich zu einem einzelnen Strahl 17 zusammenzuführen. Dagegen ist das in Fig. 4 gezeigte Pentaprisma 21 als Teil einer Trennoptik 33 (vgl. Fig. 10) einer Ausführungsform einer erfindungsgemäßen Messvorrichtung 1 dazu ausgebildet, einen einzelnen Strahl 17 in einen ersten, einen zweiten, einen dritten, einen vierten und einen fünften Strahl 17.1, 17.2, 17.3, 17.4, 17.5 räumlich aufzuteilen.

Wie in Fig. 3 dargestellt ist, kann an jeder der fünf nach Art eines regelmäßigen Fünfecks angeordneten Grenzflächen 15.1, 15.2, 15.3, 15.4, 15.5 des Pentaprismas 21 ein jeweiliger Strahl 17.1, 17.2, 17.3, 17.4, 17.5 transmittiert werden und auf diese Weise in das Pentaprisma 21 eindringen, wo er an jeweils weiteren Grenzflächen 15.1, 15.2, 15.3, 15.4, 15.5 reflektiert werden kann, bis er an der ersten Grenzfläche 15.1 wieder aus dem Pentaprisma 21 austritt. Durch entsprechende Ausrichtung der verschiedenen Strahlen 17.1, 17.2, 17.3, 17.4, 17.5 wird dabei ein jeweiliger an einer jeweiligen Grenzfläche 15.1, 15.2, 15.3, 15.4, 15.5 in das Pentaprisma 21 eindringender Strahl 17.1, 17.2, 17.3, 17.4, 17.5 jeweils mit den bereits zuvor in das Pentaprisma 21 eingedrungen Strahlen 17.1, 17.2, 17.3, 17.4, 17.5, die an dieser Grenzfläche 15.1, 15.2, 15.3, 15.4, 15.5 reflektiert werden, vereinigt, so dass letztlich alle Strahlen 17.1, 17.2, 17.3, 17.4, 17.5 das Pentaprisma 21 räumlich zu einem einzelnen Strahl 17 zusammengeführt verlassen. Um die gewünschten hohen Transmissionsgrade bzw. Reflexionsgrade für einen jeweiligen Strahl 17.1, 17.2, 17.3, 17.4, 17.5 an einer jeweiligen Grenzfläche 15.1, 15.2, 15.3, 15.4, 15.5 zu erzielen, können die Grenzflächen 15.1, 15.2, 15.3, 15.4, 15.5 wiederum in geeigneter Weise beschichtet sein.

Alternativ zu dem gezeigten Verlauf des ersten Strahls 17.1, der an der ersten Grenzfläche 15.1 transmittiert, an der zweiten bis fünften Grenzfläche 15.2, 15.3, 15.4, 15.5 reflektiert und an der ersten Grenzfläche 15.1 wieder transmittiert wird, kann der erste Strahl 17.1 an der ersten Grenzfläche 15.1 auch direkt reflektiert werden, um mit den übrigen Strahlen 17.2, 17.3, 17.4, 17.5, die das Pentaprisma 21 an der ersten Grenzfläche verlassen, zusammengeführt zu werden. Dabei ist es auch denkbar, dass der erste Strahl 17.1 an der ersten Grenzfläche 15.1 teilweise transmittiert und teilweise reflektiert wird, wobei dann beide Anteile zum zusammengeführten Strahl 17 beitragen. Daher braucht eine gegebenenfalls vorgesehene Beschichtung der ersten Grenzfläche 15.1 zumindest bezüglich des ersten Strahls 17.1 nicht speziell für einen hohen Transmissionsgrad oder einen hohen Reflexionsgrad ausgebildet zu sein.

Die mit Bezug auf Fig. 3 beschriebene Art eines Zusammenführens mehrerer Strahlen 17.1, 17.2, 17.3, 17.4, 17.5 zu einem einzelnen Strahl 17 ist bei dem in Fig. 4 gezeigten Pentaprisma 21 gerade umgekehrt, um in ansonsten analoger Weise einen einzelnen Strahl 17 in bis zu fünf Strahlen 17.1, 17.2, 17.3, 17.4, 17.5 aufzuteilen. Dabei wird der Stahl 17 an der ersten Grenzfläche 15.1 transmittiert und dringt dadurch in das Pentaprisma 21 ein, wo er an den weiteren Grenzflächen 15.2, 15.3, 15.4, 15.5 umlaufend reflektiert wird. Ein Teil des Strahls 17 wird dabei allerdings jeweils auch transmittiert und tritt daher an der jeweiligen Grenzfläche 15.1, 15.2, 15.3, 15.4, 15.5 als ein jeweiliger Strahl 17.1, 17.2, 17.3, 17.4, 17.5 aus dem Pentaprisma 21 aus. Durch geeignete Beschichtung der Grenzflächen 15.1, 15.2, 15.3, 15.4, 15.5 kann dabei vorgegeben werden, welche Wellenlängenanteile an welcher Grenzfläche 15.1, 15.2, 15.3, 15.4, 15.5 transmittiert werden, so dass die austretenden Strahlen 17.1, 17.2, 17.3, 17.4, 17.5 verschiedene Wellenlängenbereiche aufweisen.

Als Teil einer Trennoptik 33 (vgl. Fig. 10) der Messvorrichtung 1 kann ein solches optisches Bauelement 11 etwa dazu verwendet werden, den Messstrahl nach Durchlaufen der Messstrecke 31 (vgl. Fig. 10) in Strahlen 17.1, 17.2, 17.3, 17.4, 17.5 unterschiedlicher Wellenlängenbereiche aufzuteilen, die dann unterschiedlichen für den jeweiligen Wellenlängenbereich sensitiven Detektionsvorrichtungen zugeleitet werden können. Der erste Strahl 17.1 kann dabei ähnlich wie vorstehend zu Fig. 3 erläutert alternativ zu dem in Fig. 4 dargestellten Verlauf auch, zumindest teilweise, direkt an der ersten Grenzfläche 17.1 reflektiert werden.

Bei den in Fig. 5 und 6 gezeigten zueinander alternativen Strukturen jeweiliger Strahlengänge durch die Kombinationsoptik 23 einer jeweiligen Messvorrichtung 1 werden jeweils insgesamt acht Strahlen 17.1-17.8, die jeweils elektromagnetische Strahlung unterschiedlicher Wellenlängenbereiche λ umfassen, mittels sieben optischer Bauelemente 11.1-11.7 zu einem einzelnen Messstrahl 25 räumlich zusammengeführt, der dann elektromagnetische Strahlung aller jeweiligen Wellenlängenbereich λ₁₋₈ umfasst.

Dabei ist die in Fig. 5 gezeigte Struktur insofern linear, als an jedem optischen Bauelement 11.1-11.7 jeweils einer der Strahlen 17.1-17.8 zu den zuvor bereits zusammengeführten Strahlen 17.1-17.8 eingespiegelt oder auf andere Weise hinzugefügt wird. Dagegen ist die in Fig. 6 gezeigte Struktur insofern verzweigt, als an zumindest einigen optischen Bauelementen 11.1, 11.2, 11.5 vorgesehen ist, dass zwei (oder gegebenenfalls auch mehr) Kombinationsstrahlen 27 vereinigt werden, also Strahlen, die bereits durch räumliches Zusammenführen zumindest zweier Strahlen 17.1-17.8 gebildet wurden. Insbesondere werden bei der in Fig. 6 gezeigten Struktur die Strahlen 17.1-17.8 zunächst paarweise zusammengeführt, die so entstandenen Kombinationsstrahlen 27 anschließend wiederum paarweise zusammengeführt und die beiden so entstandenen Kombinationsstrahlen 27 schließlich zu dem Messstrahl 25 zusammengeführt, der somit eine Kombination aller Strahlen 17.1-17.8 darstellt.

Die genannten Strukturen werden zwar anhand der genannten acht Strahlen 17.1-17.8 erläutert, sind aber grundsätzlich unabhängig davon, ob ein jeweiliger Strahl 17.1-17.8 als Strahlengang tatsächlich elektromagnetische Strahlung führt oder nicht. Vielmehr wird durch die Kombinationsoptik 23 lediglich eine Struktur von Strahlengängen definiert, die es ermöglicht, bis zu einer gewissen Anzahl von Strahlen (bei den exemplarisch gezeigten Strukturen: bis zu acht Strahlen 17.1-17.8) zu einem einzelnen räumlich überlagerten Messstrahl 25 zusammenzuführen. Für jeden Strahlengang kann dabei eine gesonderte Strahlungsquelle an das Grundelement der Messvorrichtung 1 anordenbar sein, die einen Strahl 17.1-17.8 elektromagnetischer Strahlung eines entsprechenden Wellenlängenbereichs aussenden kann. Das Zusammenführen jeweiliger Strahlen 17.1-17.8 mittels der Kombinationsoptik 23 ist dabei allerdings unabhängig davon möglich, wie viele und welche Strahlungsquellen tatsächlich an dem Grundelement angeordnet sind und auch tatsächlich elektromagnetische Strahlung aussenden.

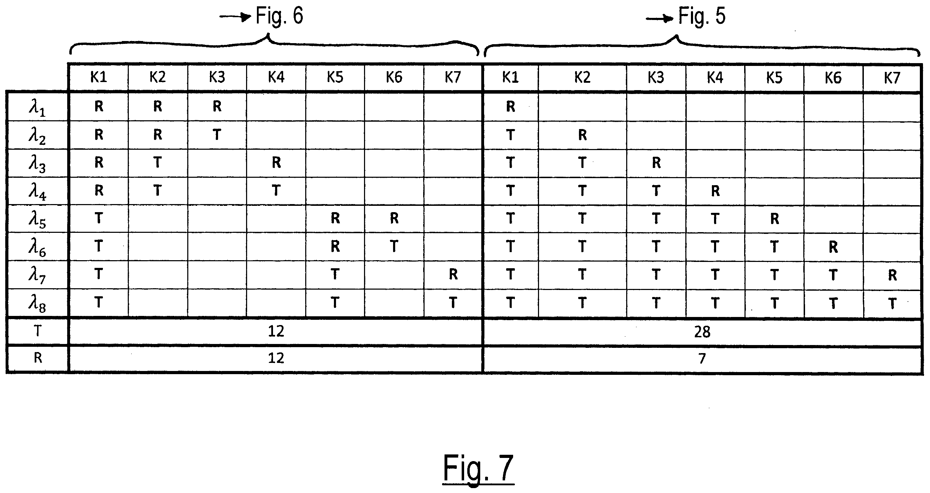

Ein Vorteil einer verzweigten Struktur, wie sie in Fig. 6 exemplarisch gezeigt ist, gegenüber einer linearen Struktur, wie sie in Fig. 5 exemplarisch gezeigt ist, wird durch die Tabelle der Fig. 7 veranschaulicht. Darin sind für die optischen Bauelemente 11.1-11.7 (hier als K1 bis K7 bezeichnet) die für eine gute Transmission (T) bzw. Reflexion (R) eines jeweiligen Wellenlängenbereichs λ vorteilhafterweise vorzusehenden Beschichtungen angegeben. Beispielsweise sollte das optische Bauelement 11.1 (K1), an dem das letzte räumliche Zusammenführen jeweiliger Strahlen zur Bildung des Messstrahls 25 erfolgt, bei der linearen Struktur gemäß Fig. 5 (rechte Hälfte der Tabelle) vorteilhafterweise für eine gute Reflexion des Wellenlängenbereichs λ₁ des ersten Strahls 17.1 und für eine gute Transmission der Wellenlängenbereiche λ₂-λ₈ der übrigen Strahlen 17.2-17.8 geeignet beschichtet sein. Bei einer verzweigten Struktur gemäß Fig. 6 (linke Hälfte der Tabelle) sollte das entsprechende optische Bauelement 11.1 (K1) vorteilhafterweise für eine gute Reflexion des Kombinationsstrahls, der die Wellenlängenbereiche λ₁-λ₄ der ersten vier Strahlen 17.1-17.4 umfasst, und für eine gute Transmission des Kombinationsstrahls, der die Wellenlängenbereichen λ₅-λ₈ der übrigen Strahlen 17.5-17.8 umfasst, geeignet beschichtet sein.

Die Komplexität der jeweiligen Beschichtung ist für dieses in der Reihenfolge des Durchlaufens letzte optische Bauelement 11.1 (K1) daher zwar vergleichbar. Allerdings nimmt die erforderliche Komplexität für in der Reihenfolge des Durchlaufens vorangehende optische Bauelemente 11.2-11.7 (K2-K7) bei einer verzweigten Struktur schneller ab, was anhand der Tabelle direkt festgestellt werden kann. Insbesondere wird dies durch die in der Tabelle ganz unten angegebenen Zahlen verdeutlicht, welche angeben, wie viele Transmissionen (Zeile T) und wie viele Reflexionen (Zeile R) jeweils insgesamt zu berücksichtigen sind. An den Zahlen (28 Transmissionen und 7 Reflexionen bei einer linearen Struktur gemäß Fig. 5 im Vergleich zu 12 Transmissionen und 12 Reflexionen bei einer verzweigten Struktur gemäß Fig. 6) ist zu erkennen, dass der Gesamtkomplexitätsgrad bei einer verzweigten Struktur vorteilhafterweise geringer ist als bei einer linearen Struktur. Ferner lässt sich den Tabellen entnehmen, dass der jeweils insgesamt von einem jeweiligen optischen Bauelement 11.1-11.7 abzudeckende Wellenlängenbereich bei einer verzweigten Struktur im Mittel deutlich geringer sein kann. Auch hierdurch vereinfacht sich die Ausbildung der jeweiligen optischen Bauelemente 11.1-11.7 der Kombinationsoptik 23, was insbesondere zu geringeren Kosten führen kann.

Für eine gegebenenfalls vorgesehene Trennoptik 33 (vgl. Fig. 10) einer jeweiligen Messvorrichtung 1 gilt Entsprechendes, da die Aufteilung des Messstrahls 25 in mehrere Strahlen 17 unterschiedlicher Wellenlängenbereiche zumindest im Wesentlichen lediglich eine funktionale Umkehrung des Zusammenführens mehrerer Strahlen 17 zu einem einzelnen Messstrahl 25 darstellt. Auch für das Aufteilen ist dabei eine verzweigte Struktur gegenüber einer linearen Struktur grundsätzlich bevorzugt.

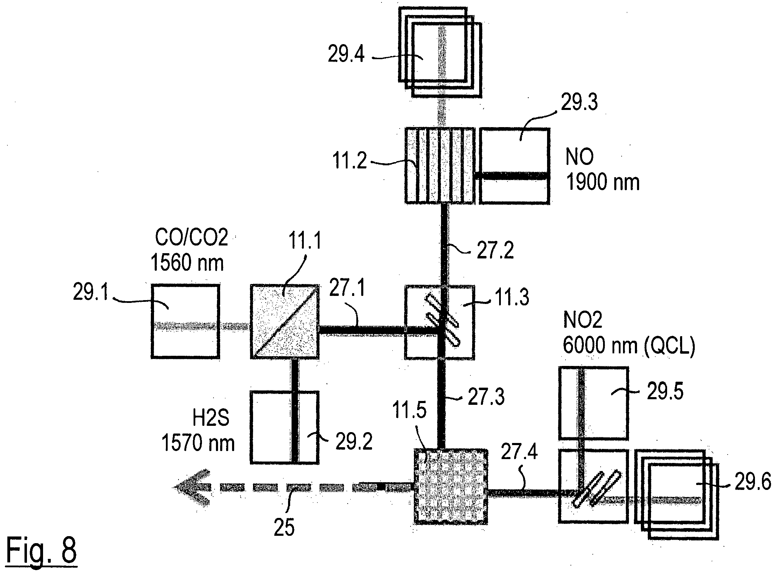

Die Fig. 8 zeigt eine exemplarische Anordnung verschiedener optischer Bauelemente 11.1-11.5 und verschiedener Strahlungsquellen 29.1-29.6 zur Bildung eines einzelnen Messstrahls 25, der durch räumliches Zusammenführen der von den verschiedenen Strahlungsquellen 29.1-29.6 ausgesandten elektromagnetischen Strahlung unterschiedlicher Wellenlängenbereiche gebildet ist. Konkret ist bei dieser Ausführungsform vorgesehen, dass sechs Strahlungsquellen 29.1-29.6 an dem Grundelement 35 (in Fig. 8 nicht gezeigt; vgl. Fig. 10) der Messvorrichtung 1 anordenbar sind, deren jeweilige elektromagnetische Strahlung entlang jeweiliger Strahlengänge geführt wird.

Dabei sind zur Messung von CO und CO₂ ein Laser mit einer Wellenlänge von etwa 1560 nm sowie zur Messung von H₂S ein Laser mit einer Wellenlänge von etwa 1570 als Strahlungsquellen 29.1, 29.2 vorgesehen. Da diese Wellenlängen sehr nah beieinander liegen, wird die elektromagnetische Strahlung dieser beiden Laser unterschiedlich polarisiert, so dass sie mittels eines Polwürfels 11.1 dennoch zuverlässig und mit hohem Transmissionsgrad bzw. Reflexionsgrad zu dem Kombinationsstrahl 27.1 räumlich zusammengeführt werden können. Ein weiterer Kombinationsstrahl 27.2 wird durch Zusammenführen der elektromagnetischen Strahlung eines Laser 29.3 mit einer Wellenlänge von etwa 1900 nm zur Messung von NO und eines im Bereich langwelliger nahinfraroter Strahlung wellenlängenvariablen Lasers 29.4 mittels eines auf die Wellenlänge des erstgenannten Lasers 29.3 abgestimmten Volumen-Bragg-Gitters 11.2 gebildet.

Diese beiden Kombinationsstrahlen 27.1, 27.2 werden anschließend mittels eines dichroitischen Strahlteilers 11.3, der zur Vereinigung kurzwelliger nahinfraroter Strahlung und langwelliger nahinfraroter Strahlung geeignet ist, zu einem weiteren Kombinationsstrahl 27.3 zusammengeführt.

Ein mittelinfraroter Zweig der Anordnung umfasst einen Quantenkaskadenlaser (QCL) 29.5, der zur Messung von NO₂ elektromagnetische Strahlung mit einer Wellenlänge von etwa 6000 nm aussendet, sowie einen im mittelinfraroten Bereich, insbesondere im Bereich von Wellenlängen größer als etwa 6000 nm weitabstimmbaren, d.h. über einen breiten Bereich wellenlängenvariablen, Laser 29.6. Die von diesen Strahlungsquellen 29.5, 29.6 ausgesandte elektromagnetische Strahlung wird mittels eines weiteren dichroitischen Strahlteilers 11.4 zu einem Kombinationsstrahl 27.4 räumlich zusammengeführt. Der in dem Kombinationsstrahl 27.3 zusammengefasste NIR-Zweig und der in dem Kombinationsstrahl 27.4 zusammengefasste MIR-Zweig werden schließlich mittels eines geometrischen Strahlteilers 11.5 zu einem einzelnen Messstrahl 25 räumlich zusammengeführt, der dann die Wellenlängen aller Strahlungsquellen 29.1-29.6 umfasst und zum Messen der zu messenden Substanzen durch die Messstrecke 31 (vgl. Fig. 10) geleitet wird.

Um die Messstrecke 31 gegenüber einem Innenraum der Messvorrichtung 1 abzutrennen, kann das optische Bauelement 11, an welchem durch Zusammenführen jeweiliger Strahlen 17 bzw. Kombinationsstrahlen 27 letztlich der Messstrahl 25 gebildet wird, als Abschlussfenster ausgebildet sein. Eine solche Ausführungsform ist exemplarisch in Fig. 9 gezeigt. Das darin dargestellte optische Bauelement 11 umfasst vier Keilelemente 13, die paarweise dazu dienen, von einem jeweiligen Strahl 17 bzw. Kombinationsstrahl 27 mit definiertem Winkelversatz durchlaufen zu werden. An der äußeren Grenzfläche 15 eines der beiden Paare von Keilelementen 13 wird der Strahl 17 in den Kombinationsstrahl 27 eingespiegelt, so dass der Messstrahl 25 gebildet wird, der anschließend die Messstrecke 31, von der nur der Anfang dargestellt ist, durchläuft. Durch eine solche Ausbildung kann ein optisches Bauelement 11, an dem jeweilige Strahlen 17 zusammengeführt werden, zugleich als Abschlussfenster genutzt werden, so dass kein zusätzliches Abschlussfenster benötigt wird, durch das weitere zu passierende Grenzflächen 15 entstehen würden.

In Fig. 10 ist exemplarisch ein schematischer Aufbau einer Messvorrichtung 1 gezeigt. Die Messvorrichtung 1 umfasst ein Grundelement 35, in dem eine Kombinationsoptik 23 vorgesehen ist, die verschiedene nicht einzeln dargestellte optische Bauelemente 11 umfasst, um mehrere Strahlen 17 zu einem einzelnen Messstrahl 25 räumlich zusammenzuführen. Die Kombinationsoptik kann dabei insbesondere eine verzweigte Struktur, etwa entsprechend der in Fig. 6 gezeigten Struktur, aufweisen. Zur Erzeugung der Strahlen 17 ist in das Grundelement 35 eine Strahlungsquelle 29 aufgenommen. Zudem sind zwei weitere Strahlungsquellen 29 von außen an das Grundelement 35 angeschlossen. Die Strahlungsquellen 29 sind dabei grundsätzlich austauschbar.

Die Messvorrichtung 1 weist ferner eine Trennoptik 33 auf, die bei der gezeigten Ausführungsform wie die Kombinationsoptik 23 in dem Grundelement 35 vorgesehen ist. Allerdings kann die Trennoptik 33 auch in einem von dem Grundelement 35 separaten Element der Messvorrichtung ausgebildet sein, das für eine Messung relativ zu dem Grundelement 35 oder auch in direktem Kontakt zu dem Grundelement 35 geeignet anordenbar sein kann. Eine solche alternative Ausführung wird durch die punktierte Linie durch das Grundelement 35 schematisch angedeutet.

Der Messstrahl 25 wird nach Durchlaufen einer Messstrecke 31, die grundsätzlich auch anders als dargestellt innerhalb des Grundelements 35 verlaufen kann, von der Trennoptik 33 in mehrere Strahlen 17 aufgeteilt, die auf Detektionsvorrichtungen 37 treffen. Anhand der Detektionsvorrichtungen 37 kann dann die wellenlängenabhängige Absorption der elektromagnetischen Strahlung durch die zu messenden Substanzen in der Messstrecke 31 erfasst werden. Bei der gezeigten Ausführungsform sind vier Detektionsvorrichtungen 37 vorgesehen, die für jeweils andere Wellenlängenbereiche spezifisch sind. Die Zahl der Detektionsvorrichtungen 37 braucht dabei nicht der Zahl der Strahlungsquellen 29 zu entsprechen, sondern kann insbesondere auch kleiner sein. Grundsätzlich kann vorgesehen sein, dass die Detektionsvorrichtungen 37 nach Bedarf an das Grundelement 35 anordenbar sind. Detektionsvorrichtungen 37, die für eine bestimmte Anwendung gerade nicht benötigt werden, brauchen aber nicht unbedingt von dem Grundelement 35 entfernt zu werden. An der schematisch gezeigte Messvorrichtung 1 können beispielsweise insgesamt sechs Strahlungsquellen 29 gleichzeigt anordenbar sein, von denen in der dargestellten Konfiguration lediglich drei an dem Grundelement 35 angeordnet sind, und beispielsweise insgesamt bis zu vier Detektionsvorrichtungen 37 vorgesehen werden.

Die durch die punktierte Linie getrennten Teile der in Fig. 10 dargestellten Messvorrichtung 1, können jeweils auch als eigene Messvorrichtung 1 angesehen werden. Der in Fig. 10 linke Teil zeigt dann eine Ausführungsform einer Messvorrichtung 1, an deren Grundelement 35 verschiedene Strahlungsquellen 29 wahlweise angeordnet werden können und die eine Kombinationsoptik 23 zum räumlichen Zusammenführen der von den jeweiligen an dem Grundelement 35 angeordneten Strahlungsquellen 29 ausgesandten Strahlung umfasst. Der von einer solchen Messvorrichtung 1 erzeugte Messstrahl 25 kann auch auf andere als auf die dargestellte Weise analysiert werden. Beispielsweise kann dazu eine einzelne wellenlängenspezifische Detektionsvorrichtung vorgesehen sein. Der in Fig. 10 rechte Teil zeigt eine Ausführungsform einer Messvorrichtung 1, an deren Grundelement 35 verschiedene Detektionsvorrichtungen 37 angeordnet werden können und die eine Trennoptik 33 zum Aufteilen des Messstrahls 25 in Teilstrahlen und zum Ausgeben der Teilstrahlen 17 in Richtung einer jeweiligen Detektionsvorrichtung 37 umfasst. Eine solche Messvorrichtung 1 kann auch einen auf andere als auf die dargestellte Weise erzeugten Messstrahl 25 empfangen. Beispielsweise kann der Messstrahl 25 durch eine einzelne, z.B. als Laserarray ausgebildete, Strahlungsquelle erzeugt werden.

### Bezugszeichen

- 1: Messvorrichtung
- 11: optisches Bauelement
- 13: Keilelement
- 15: Grenzfläche
- 17: Strahl
- 19: Substrat
- 21: Pentaprisma
- 23: Kombinationsoptik
- 25: Messstrahl
- 27: Kombinationsstrahl
- 29: Strahlungsquelle
- 31: Messstrecke
- 33: Trennoptik
- 35: Grundelement
- 37: Detektionsvorrichtung

## Patentansprüche

1. Messvorrichtung (1) zur gleichzeitigen spektroskopischen Messung mehrerer Substanzen, insbesondere mehrerer Gase, anhand jeweiliger wellenlängenabhängiger Absorption ausgesandter elektromagnetischer Strahlung durch die Substanzen,
wobei die Messvorrichtung (1) ein Grundelement (35) und eine Kombinationsoptik (23) umfasst und insofern modular ist, als
das Grundelement (35) dazu ausgebildet ist, dass zumindest zwei Strahlungsquellen (29) zugleich an dem Grundelement (35) angeordnet werden können, die aus einer Vielzahl sich bezüglich ihres jeweiligen Wellenlängenbereichs unterscheidender, bevorzugt wellenlängenvariabler, Strahlungsquellen (29) auswählbar sind, und
die Kombinationsoptik (23) unabhängig davon, welche Strahlungsquellen (29) aus der Vielzahl verschiedener Strahlungsquellen (29) an dem Grundelement (35) jeweils angeordnet sind, dazu ausgebildet ist, die von den jeweiligen an dem Grundelement (35) angeordneten Strahlungsquellen (29) ausgesandte elektromagnetische Strahlung räumlich zusammenzuführen, um sie für ein Durchlaufen einer Messstrecke (31) mit den zu messenden Substanzen als einen einzelnen Messstrahl (25) auszugeben.

2. Messvorrichtung nach Anspruch 1,
wobei die Kombinationsoptik (23) dazu ausgebildet ist, dass die von den jeweiligen an dem Grundelement (35) angeordneten Strahlungsquellen (29) ausgesandte elektromagnetische Strahlung in dem Messstrahl (25) parallel verläuft, insbesondere mit einem Parallelversatz zwischen von unterschiedlichen Strahlungsquellen (29) ausgesandter elektromagnetischer Strahlung von höchstens 50 % des mittleren Strahldurchmessers.

3. Messvorrichtung nach Anspruch 1 oder 2,
wobei die Kombinationsoptik (23) zumindest ein optisches Bauelement (11) umfasst, das dazu ausgebildet ist, aus zumindest zwei, insbesondere drei, vier oder fünf, verschiedenen Richtungen auf das optische Bauelement (11) treffende elektromagnetische Strahlung unterschiedlicher Wellenlängenbereiche räumlich zusammenzuführen und als einen einzelnen Strahl (17) auszugeben.

4. Messvorrichtung nach Anspruch 3,
wobei das optische Bauelement (11) als dichroitischer Strahlteiler, als polarisierender Strahlteiler, insbesondere Polwürfel, vorzugsweise Polwürfel mit nicht-parallelen Oberflächen, als Volumen-Bragg-Gitter oder als geometrischer Strahlteiler, insbesondere als verstellbarer geometrischer Strahlteiler, der ein mikro-opto-elektro-mechanisches System umfasst, ausgebildet ist.

5. Messvorrichtung nach Anpruch 3 oder 4
wobei die Kombinationsoptik (23) als optisches Bauelement (11) zwei Keilelemente (13) umfasst, die jeweils zwei nicht-parallele Grenzflächen (15) aufweisen und derart angeordnet sind, dass elektromagnetische Strahlung, welche in einer Einfallsrichtung auf das optische Bauelement (11) trifft und die zwei Grenzflächen (15) des einen Keilelements (13) sowie die zwei Grenzflächen (15) des anderen Keilelements (13) passiert, das optische Bauelement (11) in einer Ausfallsrichtung verlässt, die unabhängig von der Wellenlänge der elektromagnetischen Strahlung in einem bestimmten Winkel, insbesondere parallel, zu der Eingangsrichtung ausgerichtet ist.

6. Messvorrichtung nach zumindest einem der Ansprüche 3 bis 5, wobei die Kombinationsoptik (23) als optisches Bauelement (11) ein Keilelement (13) mit einer ersten und einer zweiten Grenzfläche (15.1, 15.2) umfasst, die nicht-parallel zueinander ausgerichtet sind, wobei das optische Bauelement (11) derart angeordnet ist, dass ein erster, ein zweiter und ein dritter Strahl (17.1, 17.2, 17.3) räumlich zusammenführbar sind, indem der erste Strahl (17.1) an der ersten und der zweiten Grenzfläche (15.1, 15.2) transmittiert wird;
der zweite Strahl (17.2) an der zweiten Grenzfläche (15.2) reflektiert wird; der dritte Strahl (17.3) an der zweiten Grenzfläche (15.2) transmittiert, an der ersten Grenzfläche (15.1) reflektiert und an der zweiten Grenzfläche (15.2) erneut transmittiert wird;
und der erste, der zweite und der dritte Strahl (17.1, 17.2, 17.3) das optische Bauelement (11) anschließend zu einem einzelnen Strahl (17) zusammengeführt an der zweiten Grenzfläche (15.2) verlassen.

7. Messvorrichtung nach zumindest einem der Ansprüche 3 bis 6, wobei die Kombinationsoptik (23) als optisches Bauelement (11) ein Pentaprisma (21) mit einer ersten, einer zweiten, einer dritten, einer vierten und einer fünften Grenzfläche (15.1, 15.2, 15.3, 15.4, 15.5) umfasst, die jeweils nicht-parallel zueinander ausgerichtet sind, wobei das optische Bauelement (11) derart angeordnet ist, dass ein erster, ein zweiter, ein dritter, ein vierter und ein fünfter Strahl (17.1, 17.2, 17.3, 17.4, 17.5) räumlich zusammenführbar sind, indem
der erste Strahl (17.1) an der ersten Grenzfläche (17.1) reflektiert wird oder aber der erste Strahl (17.1) an der ersten Grenzfläche (17.1) transmittiert, an der zweiten bis fünften Grenzfläche (15.2, 15.3, 15.4, 15.5) reflektiert und an der ersten Grenzfläche (15.1) wiederum transmittiert wird; der zweite Strahl (17.2) an der zweiten Grenzfläche (15.2) transmittiert, an der dritten bis fünften Grenzfläche (15.3, 15.4, 15.5) reflektiert und an der ersten Grenzfläche (15.1) transmittiert wird;
der dritte Strahl (17.3) an der dritten Grenzfläche (15.3) transmittiert, an der vierten und fünften Grenzfläche (15.4, 15.5) reflektiert und an der ersten Grenzfläche (15.1) transmittiert wird;
der vierte Strahl (17.4) an der vierten Grenzfläche (15.4) transmittiert, an der fünften Grenzfläche (15.5) reflektiert und an der ersten Grenzfläche (15.1) transmittiert wird;
der fünfte Strahl (17.5) an der fünften und ersten Grenzfläche (17.5, 17.1) transmittiert wird;
und der erste bis fünfte Strahl (17.1, 17.2, 17.3, 17.4, 17.5) das optische Bauelement anschließend zu einem einzelnen Strahl (17) zusammengeführt an der ersten Grenzfläche (15.1) verlassen.

8. Messvorrichtung nach zumindest einem der vorstehenden Ansprüche, wobei die Kombinationsoptik (23) dazu ausgebildet ist, die von den jeweiligen an dem Grundelement (35) angeordneten Strahlungsquellen (29) ausgesandte elektromagnetische Strahlung derart räumlich zusammenzuführen, dass der resultierende einzelne Messstrahl (25) durch räumliches Zusammenführen zumindest zweier Kombinationsstrahlen (27) gebildet wird, die zuvor ihrerseits durch räumliches Zusammenführen jeweils zumindest zweier Strahlen (17) gebildet wurden,
wobei die Kombinationsoptik (23) zum räumlichen Zusammenführen der zwei Kombinationsstrahlen (27) vorzugsweise ein optisches Element (11) umfasst, das insofern ein Abschlussfenster bildet, als es einen Innenraum des Grundelements (35) von der Messstrecke (31) mit den zu messenden Substanzen trennt.

9. Messvorrichtung nach Anspruch 8,
wobei einer der zwei Kombinationsstrahlen (27) Wellenlängen im Bereich nahinfraroter (NIR) Strahlung aufweist und der andere Wellenlängen im Bereich mittelinfraroter (MIR) Strahlung aufweist,
wobei bevorzugt der Wellenlängen im Bereich nahinfraroter (NIR) Strahlung aufweisende Kombinationsstrahl (27) durch räumliches Zusammenführen zweier Strahlen (17) gebildet ist, von denen einer Wellenlängen im Bereich kurzwelliger nahinfraroter (SWNIR) Strahlung aufweist und der andere Wellenlängen im Bereich langwelliger nahinfraroter (LWNIR) Strahlung aufweist.

10. Messvorrichtung nach Anspruch 8 oder 9,
wobei die Kombinationsoptik (23) zum räumlichen Zusammenführen der zwei Kombinationsstrahlen (27) ein optisches Element (11) umfasst, das als geometrischer Strahlteiler ausgebildet ist.

11. Messvorrichtung nach zumindest einem der vorstehenden Ansprüche, wobei die Messvorrichtung (1) zusätzlich eine Trennoptik (33) umfasst, die unabhängig davon, welche Strahlungsquellen (29) aus der Vielzahl verschiedener Strahlungsquellen (29) an dem Grundelement (35) jeweils angeordnet sind, dazu ausgebildet ist, den Messstrahl (25) nach Durchlaufen der Messstrecke (31) in Teilstrahlen (17) unterschiedlicher Wellenlängenbereiche räumlich aufzuteilen, um die Teilstrahlen (17) in Richtung verschiedener für den jeweiligen Wellenlängenbereich spezifischer Detektionsvorrichtungen (37) auszugeben,
wobei die Trennoptik (33) vorzugsweise zumindest ein optisches Bauelement (11) umfasst, das dazu ausgebildet ist, als ein einzelner Strahl (17), insbesondere als ein aus Strahlung der jeweiligen Strahlungsquellen (29) kombinierter Strahl, auf das optische Bauelement (11) treffende elektromagnetische Strahlung in zumindest zwei, insbesondere drei, vier oder fünf, Teilstrahlen (17) unterschiedlicher Wellenlängenbereiche räumlich aufzuteilen und in jeweils verschiedene Richtung auszugeben.

12. Messvorrichtung nach zumindest einem der vorstehenden Ansprüche, wobei das Grundelement (35) ferner dazu ausgebildet ist, dass zumindest zwei Detektionsvorrichtungen (37) zugleich an dem Grundelement (35) angeordnet werden können, die aus einer Vielzahl sich bezüglich ihres jeweiligen Wellenlängenbereichs unterscheidender Detektionsvorrichtungen (37) auswählbar sind.

13. Messvorrichtung nach zumindest einem der vorstehenden Ansprüche, wobei die Strahlungsquellen (29) der genannten Vielzahl verschiedener Strahlungsquellen (29) insgesamt dazu ausgebildet sind, elektromagnetische Strahlung mit Wellenlängen in einem Bereich von etwa 750 nm bis etwa 12000 nm auszusenden,
und/oder
wobei die Messvorrichtung (1) dazu ausgebildet ist, dass mindestens 3, bevorzugt mindestens 5, insbesondere mindestens 8, Strahlungsquellen (29) für ein gleichzeitiges Aussenden jeweiliger elektromagnetischer Strahlung an dem Grundelement (35) angeordnet werden können.

14. Messvorrichtung (1) zur gleichzeitigen spektroskopischen Messung mehrerer Substanzen, insbesondere mehrerer Gase, anhand jeweiliger wellenlängenabhängiger Absorption ausgesandter elektromagnetischer Strahlung durch die Substanzen,
wobei die Messvorrichtung (1) ein Grundelement (35) und eine Trennoptik (33) umfasst und insofern modular ist, als
das Grundelement (35) dazu ausgebildet ist, dass zumindest zwei Detektionsvorrichtungen (37) zugleich an dem Grundelement (35) angeordnet werden können, die aus einer Vielzahl sich bezüglich ihres jeweiligen Wellenlängenbereichs unterscheidender Detektionsvorrichtungen (37) auswählbar sind, und
die Trennoptik (33) unabhängig davon, welche Detektionsvorrichtungen (37) aus der Vielzahl verschiedener Detektionsvorrichtungen (37) an dem Grundelement (35) jeweils angeordnet sind, dazu ausgebildet ist, einen Messstrahl (25) in Teilstrahlen (17) unterschiedlicher Wellenlängenbereiche räumlich aufzuteilen, um die Teilstrahlen (17) in Richtung verschiedener für den jeweiligen Wellenlängenbereich spezifischer Detektionsvorrichtungen (37)auszugeben.

15. Messvorrichtung nach Anspruch 14,
wobei die Detektionsvorrichtungen (37) der genannten Vielzahl verschiedener Detektionsvorrichtungen (37) insgesamt dazu ausgebildet sind, elektromagnetische Strahlung mit Wellenlängen in einem Bereich von etwa 750 nm bis etwa 12000 nm zu detektieren,
und/oder
wobei die Messvorrichtung (1) dazu ausgebildet ist, dass mindestens 3, bevorzugt mindestens 5, insbesondere mindestens 8, Detektionsvorrichtungen (37) für ein gleichzeitiges Erfassen jeweiliger elektromagnetischer Strahlung an dem Grundelement (35) angeordnet werden können.
